(19) **Europäisches Patentamt**
**European Patent Office**
**Office européen des brevets**

(11) **EP 4 749 253 A2**

(12) **EUROPEAN PATENT APPLICATION**

(43) Date of publication:
**27.05.2026 Bulletin 2026/22**

(21) Application number: **26168229.8**

(22) Date of filing: **20.04.2023**

(51) International Patent Classification (IPC):
**G01J 3/28** $^{(2006.01)}$

(52) Cooperative Patent Classification (CPC):
**G01J 3/2823; G01J 3/0229; G01J 3/027;**
G01J 2003/1217; G01J 2003/2806;
G01J 2003/2826

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(62) Document number(s) of the earlier application(s) in accordance with Art. 76 EPC:
**23169076.9 / 4 450 955**

(71) Applicant: **Intelligent Vision GmbH**
**69115 Heidelberg (DE)**

(72) Inventors:
• **GISKE, Arnold**
**69115 Heidelberg (DE)**

• **BOBANOVIC, Fedja**
**69115 Heidelberg (DE)**

(74) Representative: **Fleuchaus & Gallo Partnerschaft mbB**
**Steinerstraße 15/A**
**81369 München (DE)**

Remarks:
This application was filed on 26.03.2026 as a divisional application to the application mentioned under INID code 62.

(54) **ENCODING AND DECODING THE SPECTRAL DISTRIBUTION OF LIGHT INVOLVING A NEURAL NETWORK**

(57) The particular spectral distribution (310) of light (210) is encoded to a spectral distribution identifier (250/270). The light (210) is separately filtered by a set of filters (120-n), that together comply with uniqueness conditions. The filtered light (220-n) is measured (130) to obtain a provisional intensity vector ({B}, 230-n). To compensate for variations, computing functions (140, 150, 160, 170) use an intensity reference value (L_DATA) to accommodate light variations and use pre-determined calibration data ({CAL}) to accommodate filter variations. The computing functions thereby turn the provisional intensity vector to the spectral distribution identifier (250/270). Pre-determined calibration data ({CAL}) are obtained from a neural network that operates with simulated data.

FIG. 3

EP 4 749 253 A2

**Description**

**Technical Field**

In general, the disclosure relates to data that represents light, and more in particular, the disclosure relates to methods, computers, and computer program products to encode the spectral distribution of light into data.

**Background**

Physical objects can provide light: by emitting light, reflecting light, transmitting light, refracting light or otherwise. Humans can conclude at least some physical phenomena or properties regarding the objects (i.e., object properties in the following) by investigating the light from the objects. Much simplified, such conclusions are possible because the object properties influence the light properties. Light properties are, for example, spectral distribution and light intensity.
As many objects have a dimension in space, the spectral distribution and the light intensity may vary, for example, along surfaces of the objects. Since the object properties may change over time, the light properties such as spectral distribution and light intensity may change as well.
Humans can investigate the object properties by visually inspecting the objects. The human eye perceives variations in the spectral distributions as variations in color and perceives light intensity as brightness. For example, a human observer may inspect a tree (i.e., the object) and recognize that - at a particular location of the tree - an apple is ready for harvest (i.e., the property). This is possible because the apple appears in a color (such as red) that contrasts to the color of the leaves (such as green) and that is characteristic for ripe apples.
Limitations to visual inspection are well known, and it is sufficient to mention only some of them:

- Different human inspectors may perceive light with identical spectral distribution (and identical light intensity) differently.
- Human eyes are usually not able to inspect light and to derive conclusions in absolute terms.
- There is a limitation in space: human inspectors may have difficulties to visually inspect relatively large objects. Eventually they would have to move along the objects, would have to move near to the object or would have to move away from the objects.
- There is a time limitation human inspectors would have to be present to see the object, but they can not look to the past.
- There is a spectral limitation: humans can investigate object properties from (visible) light only, but some of the more interesting object properties can be investigated through non-visible radiation only.

Such limitations can be overcome - at least partially - if light information is processed in the form of digital data. Developers design applications for technical systems, and human inspectors turn into users of such applications. The developers perform at least some of the following activities:
(i) The developers identify the objects and identify at least one object property that is of interest.
(ii) The developers specify technical parameters of the system. For example, parameters may describe the spectral distribution of the light that are expected to arrive from the object, the space of the object, the maximal allowable dimensions of the technical system or its components, and the time intervals during that light from the object is available, and so on. The developers would select the technical parameters such that the property (of interest) can be investigated.
(iii) The developers then design the technical system (with components of that system) to perform the application. The developers thereby select technical system components in accordance with the technical parameters.
In a first example, a user is located far away from the tree. Visual inspection in front of the tree is not possible. Regarding the object and the object property, the user is interested if the tree offers a red apple that is ready for harvest. Regarding the technical parameters, the system would process data for the visible wavelength range and for a spectral resolution to differentiate at least red from green. The system also needs to process data that relates to the leaves of the tree (at least where the tree can have apples). A suitable technical system would comprise a hand-held digital camera, a data network, and a screen.
In a second example, the user needs (a) to determine the sort of the apple and (b) to detect potential deviations from normal such as spots on the surface. Technical parameters comprise (i) a spectral range that covers that light from the surface of the apple and (ii) a spectral resolution that allows to differentiate tiny variations on the surface. Regarding the technical system, the developer would stay with a hand-held digital camera but would pay special attention to range and resolution, and potentially would apply image processing by a computer.
In a third example, the user needs to identify chemical substances in the apple. Such substances can be residuals from fertilizers, pesticides, or the like. The parameters range ($\lambda\_min$, $A\_max$) and resolution ($\Delta\lambda$) are specified to identify spectral lines that are typical for such substances. Using spectroscopy (with spectrometers) is an appropriate selection, even if the spectrometer would be limited to a laboratory so that the apple would have to be carried to the lab. Once the spectrum has been measured, the user can compare it to references, usually assisted by a computer.

While the examples appear very simple, selecting the technical components according to the technical parameters usually confronts the developers with a variety of technical constraints. It is also noted that the system components are arranged in a unidirectional chain, from a data provider, via a data link to a data consumer. In the first example, the chain goes from the digital camera, via a network (and/or a storage) to the screen. In the second example, the image processing computer is added to the data consumer. In the third example, the spectrometer serves as the data provider, and the computer acts as the data consumer.

As the user is usually located at the end of the chain - at the data consumer - the detection of the object property is possible only if the arriving data has sufficient detail.

The technical constraints therefore arise usually in combination, and the following can only be a non-exclusive overview to some of the constraints.

- Data accuracy parameters (among them spectral resolution) are related to hardware requirements for system components and to the amount of data to be handled.
- Light at different wavelength ranges (such as visible light and infrared radiation) is usually captured by differently designed equipment.

WO 2018/056976 A1 describes an approach to obtain spectral data in the context to recognize known spectra that are characteristic for particular substances, in a so-called sparse situation. The document presents a plurality of filters that are moved on a wheel so that filtered light arrives at a single sensor. The filters and their combination are described to be specific to the sparse use case. The filters typically reject spectral range portions, but that rejection might prevent the identification of particular substances. The document further describes data processing with a transmission matrix, so that known spectra can be recognized.

## Summary

A method to encode the particular spectral distribution of light into a spectral distribution identifier is disclosed. The light has a wavelength-specific intensity in the particular spectral distribution within a wavelength range, from a minimum wavelength to a maximum wavelength with a wavelength resolution.

The method step receiving the light is followed by filtering the received light. The light is filtered by a filter set of at least N = 3 filters and with each filter of the filter set separately. The filter set complies with the following conditions: (1) each filter in the filter set has a filter-specific transmission function that describes a wavelength-specific transmission of the filter. (2) In a combined transmission function for the filter set, the concatenation of the transmissions - being the transmission vector - is unique for any wavelength and is unique for each spectral distribution of light in the wavelength range. (3) Each filter in the filter set is a single-state filter.

The method continues, for each filter separately, by measuring the intensity of the filtered light over the wavelength range to obtain provisional intensity values. These values are the elements of a provisional intensity vector.

The method is computer-implemented at least in some steps: By computing functions, the computer provides a spectral distribution identifier that encodes the particular spectral distribution of the received light. The computing functions use an intensity reference value to accommodate light variations and use pre-determined calibration data to accommodate filter variations.

Providing the spectral distribution identifier is performed by computing functions that are implemented either according to a first alternative or to a second alternative.

In the first alternative, a first computing function, in accordance with pre-determined calibration data, maps the provisional intensity values to calibrated intensity values being the elements of a calibrated intensity vector. A second computing function separately divides the calibrated intensity values of the calibrated intensity vector by the intensity reference value, to calculate normalized calibrated intensity values being the elements of a normalized calibrated intensity vector. The spectral distribution identifier is therefore provided as the normalized calibrated intensity vector.

In the second alternative, a third computing function separately divides the provisional intensity values by the intensity reference value, to calculate normalized intensity values being the elements of a normalized intensity vector. A fourth computing function, in accordance with the pre-determined calibration data, maps the normalized intensity values to calibrated normalized intensity values being the elements of a calibrated normalized intensity vector. The spectral distribution identifier is therefore provided as the calibrated normalized intensity vector.

The mapping step is preceded by determining calibration data by training a neural network with simulation data for pre-defined programmable spectral distributions and with simulated intensity vectors and simulated filtering by simulated reference filters as ground truth, with the weights in the network serving as calibration data for performing the mapping step in the first alternative forwarding the provisional intensity values to the neural network that outputs calibrated intensity values, or in the second alternative forwarding the normalized intensity values to the auxiliary neural network that outputs calibrated normalized intensity values.

Optionally, in both alternatives, the intensity reference value is obtained by measuring the intensity of the received light, wherein filtering the received light by the set of filters and measuring the intensity of the filtered light is performed in an arrangement in that the filters of the filter set are combined with corresponding sensors. These filter-and-sensor combinations are arranged in a plane that is located perpendicular to the direction of the received light. Measuring the intensity of the received light to obtain the intensity reference value is performed by conductor-and-sensor combinations that are arranged in the same plane. The filter-and-sensor combinations and the conductor-and-sensor combinations form a mosaic pattern in the plane.

Optionally, filtering the received light is performed by a filter set in that the conditions have been checked for compliance by simulation, based on encoding parameters that define each spectral distribution.

Optionally, filtering uses single-state filters for that the transmission function remains constant while the steps filtering and measuring are being performed.

Optionally, in the first alternative of the step providing, the second computing function obtains the intensity reference value by processing the provisional intensity vector, or by processing the calibrated intensity vector.

Optionally, in the first alternative, the second computing function obtains the intensity reference value by calculations, selected from the following: (i) calculating the intensity reference value as the sum of the provisional intensity values or as the sum of the calibrated intensity values, (ii) calculating the intensity reference value as the average of the provisional intensity values or as the average of the calibrated intensity values, and (iii) calculating the intensity reference value as the median of the provisional intensity values or as the median of the calibrated intensity values.

Optionally, in the second alternative of the step providing, the third computing function obtains the intensity reference value by processing the provisional intensity vector.

Optionally, the third computing function obtains the intensity reference value by calculations, selected from the following: (i) calculating the intensity reference value as the sum of the provisional intensity values, (ii) calculating the intensity reference value as the average of the provisional intensity values, and (iii) calculating the intensity reference value as the median of the provisional intensity values.

Optionally, the intensity reference value is obtained by measuring the intensity of the received light, by a sensor. In a first approach, the received light goes to the sensor directly. In a second approach, the received light goes to the sensor indirectly via a neutral light conductor, wherein the sensor measures the intensity of the received light with correcting the loss introduced by the neutral light conductor.

Optionally, the step measuring the intensity of the filtered light is performed for each filter sequentially in a multiplex sequence with a single sensor.

Optionally, in the step filtering the received light, the separation in execution is provided by having the filters of the filter set arranged as a moving filter array so that for one execution of the filtering step, the received light goes to the single sensor through one filter only.

Optionally, the multiplex sequence with the single sensor is enhanced with the single sensor also measuring the intensity of the received light. The moving filter array either comprises (if applied in the first approach) a gap for passing the received light to the single sensor directly, or comprises (if applied in the second approach) a neutral light conductor that passes the received light to the single sensor.

Optionally, the moving filter array is implemented, selected from the following: (i) a filter wheel by that the filters are arranged along a circle, wherein the filter wheel rotates around the center of that circle; and (ii) a filter block by that the filters are arranged along a line, and wherein the filter block moves in linear direction.

Optionally, wherein filtering the received light by the set of filters is performed by a plurality of filter and sensor combinations that are arranged in a plane that is located perpendicular to the direction of the received light. Measuring the intensity of the received light is thereby performed by directing a portion of the received light also to at least one further sensor directly, thereby bypassing the filters of the filter set.

The description further discloses a method to validate the applicability of a filter set as a reference for the filter set for use in the method for encoding. The method to validate can be computer-implemented for all steps. In a step receiving a use-case specification, the computer receives data that represent each spectral distribution by at least a wavelength range parameter with the minimum wavelength and the maximum wavelength, a spectral resolution parameter, an amplitude range parameter and a numerical resolution parameter of the wavelength-specific intensity. The computer, in a simulating step, simulates a plurality of S possible spectral distributions that comply with the parameters of the use-case specification. The computer obtains a transmission function matrix that describes the transmission functions of the reference filters in the reference filter set. The computer simulates the steps filtering and measuring (of the encoding method) by applying the transmission function matrix to the plurality of S possible spectral distributions. Thereby the computer obtains a plurality of S simulated provisional intensity vectors. The computer - in the next step - compares any pair of the simulated provisional intensity vectors, and thereby determines the applicability of the reference filter set in the absence of pair equality, or determines non-applicability otherwise.

Further disclosed is a computer-implemented method to decode the spectral distribution identifier (that is obtained by performing the encoding method). The decoding method comprising the following steps: receiving the spectral distribution identifier and mapping the spectral distribution identifier to a particular spectral distribution. Thereby, mapping is performed by any of the following: (i) accessing a library that represents pre-defined relations between particular spectral distribution identifiers and particular spectral distributions; (ii) simulating the encoding of a plurality of known input distributions to a corresponding plurality of spectral distribution identifiers and identifying the particular spectral distribution as the particular simulated input distribution for that the corresponding simulated distribution identifier fits to the received spectral distribution identifier; and (iii) processing the received spectral distribution identifier by a pre-trained neural network that classifies the received spectral distribution identifier to be one of a pre-defined distribution.

A computer program product that - when loaded into a memory of a computer and being executed by at least one processor of the computer - causes the computer to perform the steps of the computer-implemented decoding method.

The description also discloses a method to identify a change in the spectral distribution of received light from a physical object is disclosed as well. The received light has wavelength-specific intensity within a wavelength range from a minimum wavelength to a maximum wavelength. In a first step sequence starting at a first point in time, the received light is filtered by a filter set of at least N = 3 filters by each filter separately. This is followed by measuring the intensity of the filtered light to obtain a first vector with filter-specific intensity values.

The filter set complies with the following conditions: (1) Each filter in the filter set has a filter-specific transmission function describing a wavelength-specific transmission of the filter. (2) A combined transmission function for the filter set, that is the concatenation of the transmissions - being the transmission vector - is unique for any wavelength and is unique for each spectral distribution of light in the wavelength range. (3) Each filter in the filter set is a single-state filter.

In a second step sequence starting at a second point in time that is later than the completion of the first step sequence, there is filtering the received light again by the same set of filters separately, and again measuring the intensity of the filtered light to obtain a second vector with filter-specific intensity values. In a comparing step, the first vector and the second vector are being compared according to pre-defined comparison rules, and a change is identified in case that both vectors are distinguished from each other. Optionally, the method to identify the change uses a computing function, for separately dividing the elements of the first vector by a first intensity reference value and for separately dividing the elements of the second vector by a second intensity reference value to obtain normalized first and second vectors, and to perform the comparing step with the normalized first and second vectors.

**Brief Description of the Drawings**

   FIG. 1 illustrates a simplified overview to a data processing system with a data provider, a data link, and a data consumer;
   FIG. 2 illustrates the overview with an introduction to the data provider that implements a filter approach to encode a particular spectral distribution of light to a spectral distribution identifier;
   FIG. 3 illustrates the filter approach with details for hardware and software;
   FIG. 4 illustrates some of the hardware components, but with an additional sensor to measure luminance;
   FIG. 5 illustrates a flow chart for a method to encode the spectral distribution of light into the spectral distribution identifier;
   FIG. 6 illustrates an extended flow chart that presents the method in the context of a design time and of a calibration time;
   FIG. 7 illustrates details for filtering and measuring steps in view of different implementation options for the filters and for the sensors;
   FIG. 8 illustrates filter-and-sensor arrays in different views, in a side-view and in a view from above;
   FIG. 9 illustrates overviews to filter arrangements to apply multiplexing to the filtering and the measuring steps;
   FIG. 10 illustrates an arrangement of multiple filters and multiple sensors in an array for filtering and measuring in parallel;
   FIG. 11 illustrates the transmission functions for filters in a filter set;
   FIG. 12 also illustrates of the transmission functions the filters in the set, but shows that for some sub-range a smaller number of filters can contribute to uniqueness;
   FIG. 13 illustrates the transmission functions for four filters, but again with some modifications;
   FIG. 14 illustrates of the transmission functions for a single filter, with the transmission being constant over some wavelength sub-ranges;
   FIG. 15 illustrates a matrix with spectral diagrams;
   FIG. 16 illustrates the filter transmission functions with three typical deviation patterns;
   FIG. 17 illustrates a computing function of FIG. 3 together with implementation options;
   FIG. 18 illustrates the set-up of numeric experiments to estimate a degree of uniqueness by simulation;

FIG. 19 illustrates a decoder function performing a method for decoding;

FIG. 20 illustrates a pre-trained neural network in the decoder function;

FIG. 21 illustrates some aspects on how the neural network can be trained;

FIG. 22 illustrates a time diagram for a method to identify a change in the particular spectral distribution, by consecutively executing first and second step-sequences that belong to the encoding method; and

FIG. 23 illustrates a generic computer.

## Detailed Description

### Introduction

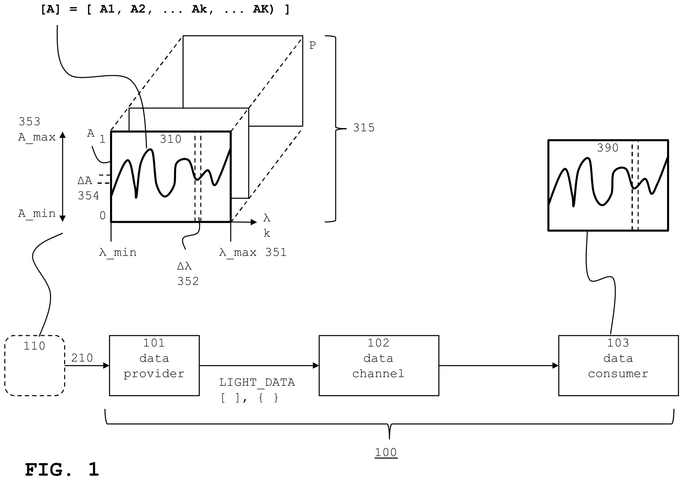

FIG. 1 illustrates a simplified overview to data processing system 100 with data provider 101, data link 102, and data consumer 103.

Object 110 is a physical object that provides light 210 by being

- a light source that emits light (e.g., artificial light sources that are incandescent lamps, fluorescent lamps, light-emitting diodes or the like, in applications such as for example traffic lights, car heard or rear lights, street lightning)
- a light-reflecting surface (e.g., the surface of the earth, or the surface of a human organ), a scene (e.g., landscapes with forestries or agricultural fields, geological formations, such as mountains),
- a light-refractive element (e.g., a lens, a prism or an optical grating).

From a more functional point of view, object 110 is an object of interest.

The examples in this introduction are not intended to be limiting and not excluding each other, and other configurations are possible (e.g., a light source illuminates an object).

Data provider 101 receives light 210 from physical object 110. In other words, light 210 is incident light at data provider 101. Physical object 110 does not have to belong to system 100.

System components 101, 102 and 103 form a data processing chain to process LIGHT_DATA. As used herein, the term "LIGHT_DATA" is the overall term for data that represents properties of light 210 that arrives from physical object 110.

Data provider 101 has one or more sensors and has computing functions to provide LIGHT_DATA. As LIGHT_DATA conveys properties of the light, LIGHT_DATA also conveys properties of the object. Light properties can be, for example, spectral density (i.e., spectral distribution), overall intensity, and polarization.

More in general, some physical properties of the object can appear in interaction with photons and can therefore appear as light properties.

Data provider 101 provides LIGHT_DATA to data consumer 103. FIG. 1 further illustrates data link 102 that communicatively couples data provider 101 with data consumer 103. Data link 102 conveys LIGHT_DATA from data provider 101 to data consumer 103. It is possible that data link 102 conveys the data over physical distances. Data link 102 can be implemented by a computer network, by temporal or permanent data storage, or by combinations thereof. Data link 102 may modify LIGHT_DATA. But for simplicity of explanation, it is assumed that data link 102 conveys LIGHT_DATA unchanged.

In many use-case applications, human users (of data consumer 103) want to measure or investigate specific physical properties of physical object 110 (i.e., the object of interest). As mentioned, the spectral distribution of the light that arrives from physical object 110 at data provider 101 can be an indicator of these object properties. Data consumer 103 is a technical device that can derive information regarding physical object 110 from LIGHT_DATA. In a simplified example, data consumer 103 is a device with a display.

### Examples for objects and use-cases

A use-case example for objects with relatively large size is the satellite imagery of agricultural and forestry areas. A satellite takes photographs or images of such areas. By observing changes in spectral distribution across the areas (in space and in time), it is possible to identify dry areas, to determine the ripeness of crops or even to predict fires.

A use-case example for objects with relatively small size is the microscopic imagery of patient biopsy samples. A camera takes stitched images with high spatial resolution. By observing spectral properties in reflected or transmitted light, or even by detecting spectrally separable biochemical markers, it is possible to deduct the health state of examined tissue.

Use-case scenarios are not only differentiated by different objects, but may also differentiated otherwise.

- A first factor is the technical propagation delay between capturing the light (such as by taking an image with a camera, in data provider 101) and processing to data to identify the spectral distribution (for example, by data consumer 103).

One aspect of such delay may be a requirement for system 100 to operate in real time (i.e., to minimize delay).

- A second factor is the computation in terms of processing by computers (CPU, GPU), the preservation of data (volatile memory and/or permanent storage), the transmission of data (bandwidth), and so on.

## LIGHT_DATA

LIGHT_DATA may have one or more of the following data aspects: SPECTRAL_DATA (i.e., spectral distribution data), L_DATA (i.e., light intensity data, among them LUMINANCE), LOCATION_DATA and TIMEPOINT_DATA.

To enable data consumer 103 to derive information regarding object 110, LIGHT_DATA has a quality that is selected according to particular use-case applications.

## Data structures

The skilled person is able to use appropriate data structures to process such LIGHT_DATA. The description therefore stays at the conceptual level, by writing vectors and the like.

It is however convenient for explanation, to specify some conventions:

- Each vector (in [ ] or { } notation) has a number of vector elements. In many occurrences, { } vectors have N elements, also noted as {element 1, element 2, ..., element n, ..., element N}, or simply {element 1, element n, element N}.
- The vector elements are computer-processable numerical values, and the skilled person can select the appropriate data conventions for the computers to process such values.
- As used herein, the term "value accuracy" indicates that selection, such as to use real numbers, to use integer numbers, etc.
- For integers, the value accuracy can be given by the number of bits, or can be given by the number of possible distinct values. For example, a numerical value represented by a 16-bit-integer has a value accuracy "16 bit" or "65536".
- Numerical values, such as A in vector [A], B in vector {B}, C in vector {C} and so on can have different value accuracies. But unless specified otherwise, all elements of a particular vector should have the same value accuracy.
- Since the vectors represent different data, the value accuracy in [A] is the "amplitude accuracy" (cf. parameter 354), the value accuracy in {T} is the "transmission accuracy", and so on.

## Details for LIGHT_DATA

SPECTRAL_DATA data represents particular spectral distribution 310 of light 210. In other words, SPECTRAL_DATA is spectral information and describes a spectrum. Spectra can conveniently be illustrated by curve diagrams that show intensity over wavelength as continua.

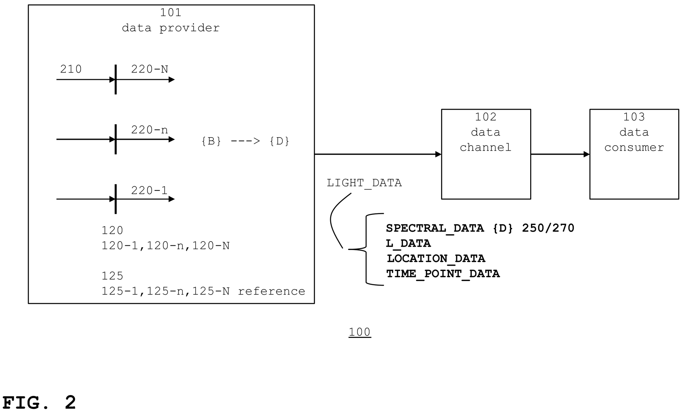

As used herein, the term "spectral distribution of light" refers to the situation that light 210 has different intensity (or "amplitudes" A, or "light flow", or "light power") at different wavelengths. There are various approaches to encode such as distribution: description and drawings use vectors, such as, for example, [A] (as in FIG. 1) and {D} (as in FIG. 2).

L_DATA represents an intensity reference of light 210. In difference to SPECTRAL_DATA, L_DATA could be processed by single numerical values (real numbers, integers), but not necessarily by vectors. There are two implementation aspects to obtain L_DATA: it can be measured (as LUMINANCE), or it can be calculated (from SPECTRAL_DATA).

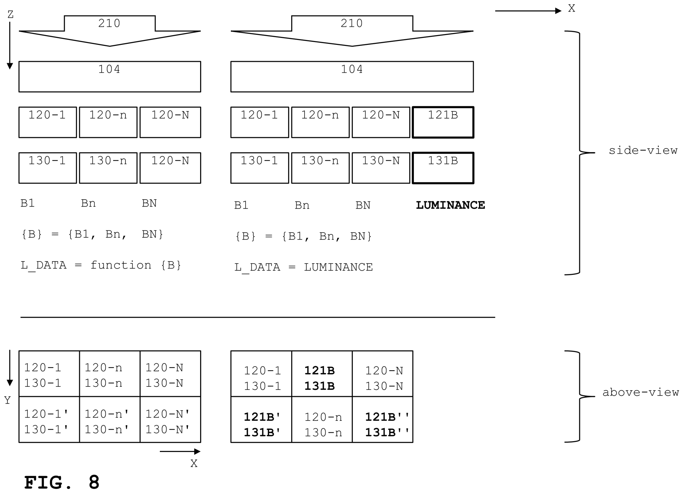

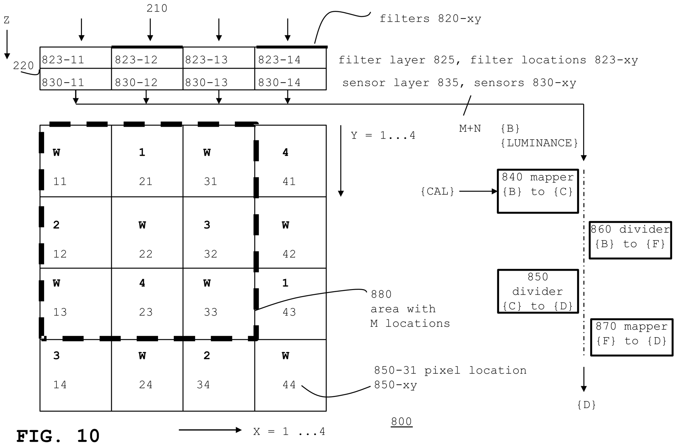

LOCATION_DATA represents the relation of light 210 to a location on object 110 (e.g., a location on the object surface), and/or on the sensor (for sensors in the form of sensor arrays, cf. FIGS. 8, 10). LOCATION_DATA could be represented by a vector with two elements, for X and Y coordinates, but using cartesian coordinates is convenient for explanation only. Other coordinate systems can be used as well. The description will refer to X and Y coordinates when it explains an implementation with multiple sensors that are arranged in an XY array plane so that LOCATION_DATA is inherently linked to the particular sensor that provides data.

TIMEPOINT_DATA refers to a particular point in time (e.g., a time stamp with calendar date, further with indication of hour, minute and/or other granularity). As used herein, TIMEPOINT_DATA is captured when the time interval during which a sensor captures light 210 is over. This is just a convention. For many situations, the duration of the time interval can be neglected.

To provide LIGHT_DATA, the one or more sensors in data provider 101 comprise

- light sensors to convert a quantity of photons into a readable electrical signal, and
- analog-to-digital converters (ADC) to turn the signal into data.

Ideally, LIGHT_DATA would correspond to the properties of the light with the highest accuracy that state-of-the-art technology of such sensors can deliver. The skilled person is familiar with photo detectors, photo diodes, photo transistors, photomultiplier tubes, photomultiplier cameras, photometers and the like, as well as with ADCs. In many implementations, both functions (to obtain the signal and to digitize it) are implemented into one device. Two technologies - charge-coupled devices (CCD) and sensors in complementary metal-oxide-semiconductor (CMOS) - are named here as representative examples.

LOCATION_DATA and TIMEPOINT_DATA would usually be available as meta-data (for example, associated with SPECTRAL_DATA). As the skilled person is familiar with tracking such meta-data, the description does not have to explain details.

**Encoding, decoding and parameters**

In general, the term "encoding" stands for representing physical phenomena by data so that data-processing can retrieve the phenomena. In the context of this description,

- the term "encoding" applies to representing particular spectral distribution 310 of light 210 by SPECTRAL_DATA, and
- the term "decoding" applies to re-establishing (or re-recognizing) particular spectral distribution 390 from SPECTRAL_DATA.

Much simplified to a theoretical situation, both particular distributions 310 and 390 would be the same. But in view of the use-case specific information processing by data consumer 103, in many use-cases this may not be required.

Both encoding and decoding have limitations, and the limitations can be described by parameters. As the parameters are to be considered for encoding, they are called "encoding parameters". By way of example, the spectral diagram for distribution 310 also illustrates the following encoding parameters:

- wavelength range 351, or ($\lambda$_min, $\lambda$_max),
- spectral resolution 352, or $\Delta\lambda$,
- amplitude range 353, and
- amplitude accuracy 354.

Encoding parameters 351, 352, 353 and 354 define an overall set 315 of spectral distributions for that encoding is possible. FIG. 1 shows set 315 by extending the 2D diagram for distribution 310 to a 3D diagram with P set members (i.e., P being the set cardinality).

In other words, distribution 310 is the particular distribution of light 210 (that arrives at data provider 101), and set 315 comprises possible distributions that are defined by the encoding parameters. Set 315 thereby symbolizes each spectral distribution for that encoding is possible. Encoding leads to particular codes (also called "spectral distribution identifiers") that are unique for each member of set 315.

In case that distribution 310 has been measured, encoding parameters 351, 352, 353 and 354 could also be discussed in view of data that was obtained by measuring. Intensity values A (or "amplitude values") can be measured absolutely (such as in terms of candela per square meter) or can be measured relatively (such as in relation to a reference amplitude).

As used herein, amplitude vector [A] = [A1, A2, ... Ak, ... AK] is a collection of intensity values (i.e., "amplitude values") for distribution 310, with k being a wavelength index. Any other distribution in set 315 would be described likewise.

FIG. 1 illustrates particular spectral distribution 310 in a diagram as a normalized distribution with the highest intensity at the top line and the lowest intensity at the bottom line. Merely for the purpose of illustration, the diagram adds "1" and "0", respectively. The same principle would apply to all members of set 315 (amplitudes here normalized).

Regarding wavelength range 351, it is noted that encoding and decoding is available for light within range 351. An alternative notation can be "wavelength band", or "spectral band". Wavelength range 351 goes from a minimum wavelength $\lambda$_min to a maximum wavelength $\lambda$_max. Exemplary values for lambda are $\lambda$_min = 380 nanometers, $\lambda$_max = 780 nanometers (visible light). The description conveniently uses wavelength A, but the teachings are applicable to light frequency as well. In index notation, k is 1 at a min and is K at A_max.

Regarding spectral resolution 352, $\Delta\lambda$ is the smallest wavelength difference for that encoding (and decoding) is available. For simplicity, the illustration assumes that $\Delta\lambda$ is equal throughout range 351 so that a particular wavelength A can be described, for example, as $\lambda k = \lambda$_min + (k-1)*$\Delta\lambda$. In other words, individual wavelengths are equidistant from k to k+1. An exemplary resolution is, for example, $\Delta\lambda$ = 0.5 nanometers. Such a resolution at 0.5 nm is an example for a so-called "high spectral resolution" or "hyperspectral resolution". The description occasionally uses K = 801 as an example, for wavelengths from 380 to 780 nm. Spectral resolution could also be indicated relatively, just for example, to range 351 (i.e., as the ratio $\Delta\lambda$ / ($\lambda$_max- $\lambda$_min))

Regarding amplitude range 353, encoding (and decoding) is available for amplitudes ranging from a minimal amplitude A_min to a maximal amplitude A_max. The diagram for distribution 310 is illustrated with a normalization to (A_min, A_max) = (0, 1).

Regarding amplitude accuracy 354 or $\Delta A$, this parameter is the above-introduced value accuracy, applied for amplitudes A. In examples, the description assumes a 16 bit accuracy.

**Encoder and decoder functions**

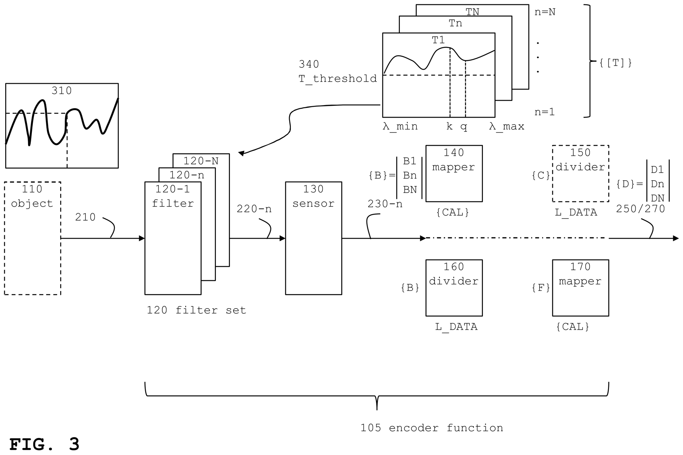

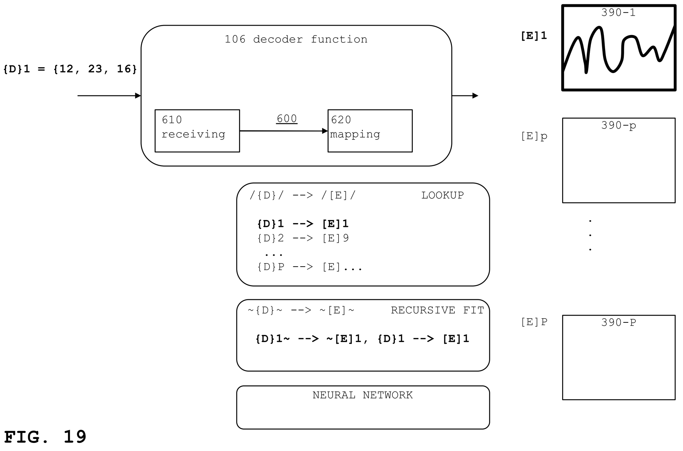

The description explains details for encoding and decoding by explaining encoder function 105 (method 400, cf. FIG. 3 for an implementation) and decoder function 106 (method 600, cf. FIG. 19-21). As it will be explained, the functions can be implemented such that the components for encoder function 105 are located in data provider 101 and that the components for decoder function 106 are located in data consumer 103. This is convenient for explanation, but not required.

Method 400 (for encoding) is partly computer-implemented, and method 600 (for decoding) is computer-implemented in all of its steps. The skilled person can provide suitable computers, depending on use-case conditions, and the description will occasionally give some examples. It is expected that different locations (for provide and consumer) lead to different physical computers. As computation for encoder function 105 can be distributed even to finer location granularity, the description also uses the term "computing function".

**Limitations**

Again, as encoding parameters 351, 352, 353 and 354 describe limitations, the following is noted.

- There is generally no encoding (decoding) outside wavelength range 351.
- There could be differences in amplitude for wavelength differences below $\Delta\lambda$ (i.e., spectral resolution 352), but such differences can not be encoded (or decoded). In other words, two similar distributions with differences smaller $\Delta\lambda$ would belong to the same set member (of set 315), and encoding would not be able to differentiate both distributions.
- Light could have intensities above or below amplitude range 353, but there is no encoding (or decoding) for such excess light.
- There is no encoding (or decoding) for amplitude differences below the accuracy 354.

As used herein, delta parameters (i.e., resolution 352 and accuracy 354) are assumed to be constant over the range parameters (i.e., ranges 351 and 353). This is convenient for explanation, but not required. Implementations could take non-linearity into account because some use-cases might require that. Such non-linearity can be described by further encoding parameters.

The cardinality P (of set 315) is relatively high. For example, amplitude vector [A] has K elements, and any distribution from [A] = [0, 0, ... 0] (all K elements are zero) to [A] = [65535, 65535, ... 65535] (all K elements at maximum), with Ak being any numeric value from 0 to 65535 can be expected. The description will come back to this number P when it explains decoding.

For simplicity it can be assumed that set 315 also applies to decoding, and some use-case driven exceptions will be explained later.

**Light parameters and apparatus parameters**

The encoding parameters can be differentiated into light parameters (wavelength range 351, spectral resolution 352) and apparatus parameters (amplitude range 353, 354).

**Other aspects**

Optionally, encoding and decoding can also relate to the light intensity. Light intensity can be encoded (and decoded) separately from the spectral distribution, or together with the spectral distribution.

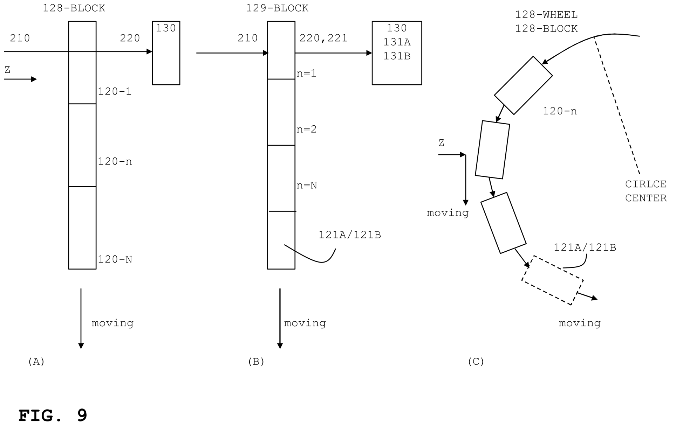

L_DATA can be defined by encoding parameters as well, but the parameters would be simplified to a magnitude range and magnitude accuracy. The wavelength does not matter. For simplicity, the description assumes L_DATA to have a magnitude range that corresponds to parameter 353 (i.e., amplitude range of SPECTRAL_DATA such as between 0 and 1) and to have a magnitude accuracy that corresponds to parameter 354 (e.g., 16 bit accuracy being the same accuracy applied to spectral data). This assumption is convenient for implementations that use the same sensor to measure L_DATA and SPECTRAL_DATA (cf. sensor 130 in the example of FIG. 9).

FIG. 1 is simplified in that it illustrates LIGHT_DATA from one location at one time interval. The skilled person can track LOCATION_DATA and TIMEPOINT_DATA without the need of further explanation herein, by meta-data for example.

## Spectroscope approach

A data processing system with encoding and decoding could be implemented by using a commercially available spectroscope (or spectrophotometer). Such spectroscopes provide spectral distribution data by individual data points that correspond to individual wavelengths.

The spectroscope approach could be summarized as encoding a particular spectral distribution by measuring amplitudes A (within amplitude range 353, at accuracy 354) for substantially all discrete wavelengths in range 351 at resolution 352. SPECTRAL_DATA would correspond to amplitude vector [A]. The skilled person is familiar with the terms "spectral bins", sometimes "spectral pixels" to express that.

The skilled person can implement the spectroscope approach by similar technologies, such as by using multi-spectral cameras, multi-spectral cameras, hypers-spectral cameras. A suitable overview to spectroscopy is given in a book by Chang, Chein-I: "Hyperspectral Imaging: Techniques for Spectral Detection and Classification." Springer Science+Business Media New York 2003. ISBN 978-1-4613-4820-7.

Spectroscopes would not only provide SPECTRAL_DATA but also one or more of LUMINANCE data, as well as LOCATION_DATA and TIMEPOINT_DATA.

## Filter approach, uniqueness conditions

FIG. 2 illustrates the overview of FIG. 1 and gives details how data provider 101 implements a filter approach.

In this filter approach, data provider 101 is implemented by hardware components and software components.

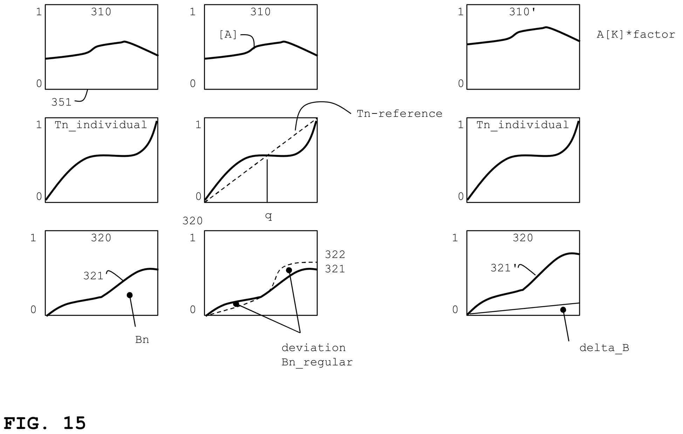

- The hardware components comprise filters 120-1, 120-n, 120-N and one or more sensors (cf. FIG. 3) to provide a provisional encoding ("provisional intensity" values B, in vector {B}). The filters comply with so-called uniqueness conditions that are related to the encoding parameters (cf. parameters 351, 352, 353 and 354 in FIG. 1). Filters 120-n filter the received light (i.e., light 210), and the one or more sensors measure the intensity of the filtered light over the wavelength range (parameter 351). Measurement involves integrating (cf. FIG. 15).
- The software components are computing functions that fine-tune {B} to intensity vector {D} = {D1, Dn, ... DN}, i.e., to SPECTRAL_DATA. The computing functions also process intensity and calibration data (cf. FIG. 3).

From an overall perspective, data provider 101 encodes (particular) spectral distribution 310 (cf. FIG. 1) of light 210 into spectral distribution identifier 250/270 (or vector {D}).

As already explained, spectral distribution 310 is a distribution in the above-explained set 315 that comprises possible distributions that are defined by encoding parameters 351, 352, 353, 354. The number of elements in vectors {B} and {D} corresponds to the number of filters (but not to the number of K distinguishable wavelengths, cf. parameters 351 and 352). The number of filters is given as N. There are at least N = 3 filters.

FIG. 2 illustrates the filters symbolically by vertical lines. Filters 120-n filter light 210 to filtered light 220-n, that means (i) to filtered light 220-1 by filter 120-1, with transmission function T1, (ii) to filtered light 220-n by filter 120-n, with transmission function Tn, and (iii) to filtered light 220-N by filter 120-N, with transmission function TN.

Filters 120-n are selected according to encoding parameters 351, 352, 353, 354. Transmission functions Tn are defined according to the parameters spectral resolution 352 and wavelength range 351), so that Tnk is the transmission of filter n at wavelength k.

The following uniqueness conditions apply:

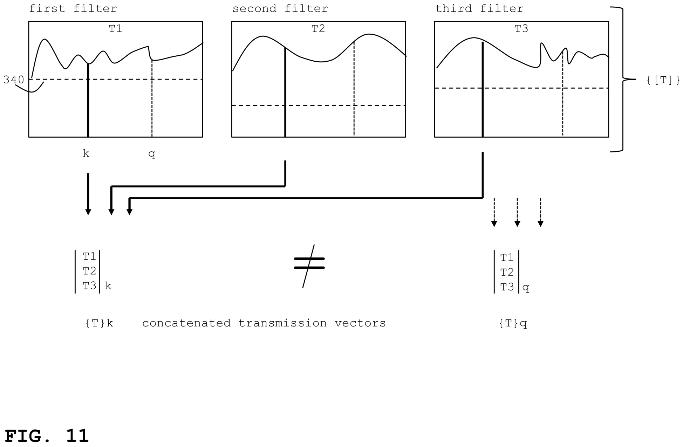

- For any particular wavelength k, the transmission function Tnk can be combined or concatenated for $N \geq 3$ filters. This concatenation is unique for any wavelength k. A more detailed illustration is available in FIGS. 11-14.
- This concatenation is also unique for any expected spectral distribution in set 315 (and that can be described according to the parameters, at least by parameters 351, 352, 353 and 354, cf. FIG. 1).
- The transmission function Tnk remains unchanged (at least for a time-interval for during that N filters are applied to receive and filter the light). The filters can therefore be regarded as single-state filters. Illustrations are available in FIGS. 9 and 10.

The description will explain in separate chapters below how filter set 120 with filters 120-n can be defined (for example, by applying rules, by applying simulation and other numerical calculations, cf. FIGS. 11-14, FIG. 18). Simplified, the filter designer takes light parameters 351/352 to identify what light at what wavelength and what resolution needs to be encoded. As the filters change the amplitudes (of the light being filtered), the filter designer takes the apparatus parameters 353 and 354 into account as well. For example, a filter that attenuates light such that the sensor could not measure the filtered light by given accuracy (parameter 354) would not be suitable.

FIG. 2 also introduces that filters can be reference filters 125-n in reference filter set 125.

**Comparison between the approaches**

Both approaches (spectroscope and filter approach) can be used alternatively, but not necessarily competing. Different usage scenarios set the encoding parameters. Although the filter approach uses a lower number of data elements (such as N < K in many scenarios), and although the filter approach uses two hardware components (filter and sensor), it appears possible to apply the filter approach for encoding particular spectral distribution 310 according to encoding parameters 351, 352, 353 and 354, that are similar as in the spectroscope approach. For example, the filter approach would encode data in the same spectral resolution $\Delta\lambda$ (or even smaller) as the spectroscope approach.

As K is larger than N, the filter approach can also be considered to be more efficient than the spectrometer approach (at least in the sense to reduce the amount of data to handle, for example by data link 102). Having less data to communicate may also support the real-time aspect.

**Interrelation between the approaches**

It is possible to use the spectroscope approach to measure filter characteristics (such as transmission functions), so that - theoretically - a computer can translate [A] to {D}. As it will be explained below, calibration techniques may use some of [A] data.

It is also possible to simulate spectral distributions [A]~, and simulation can be applied to provide filters that comply with the uniqueness conditions (or to check the conditions for existing filters), and to implement the decoder function.

**Filter implementations**

Depending on implementation options of the filters, the filter approach is further distinguished into

- a filter wheel implementation (changing the filters 120-n of filter set 120 in a measurement sequence to one sensor, with filter 120-n remaining unchanged during each individual measurement details in FIG. 9),
- a chromosaic implementation (using filters that are permanently assigned to sensors so that measurements are made in parallel, details in FIG. 10, the word pointing to chromo(meter) and to mosaic).

As both implementation options for the filters do not substantially influence the implementation of data consumer 103 (with the decoder function), the description discusses the implementation details of the decoder function towards its end.

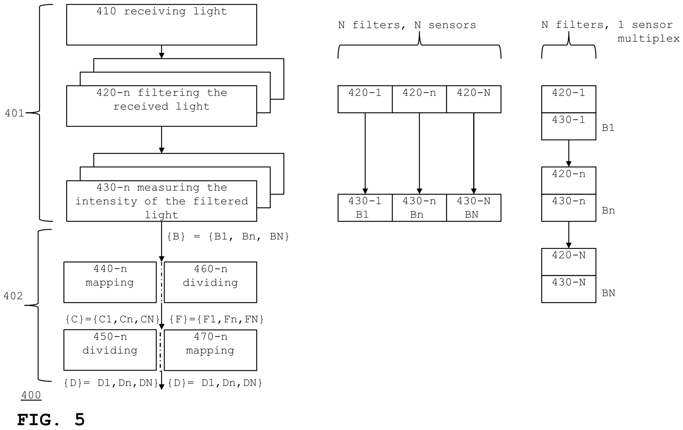

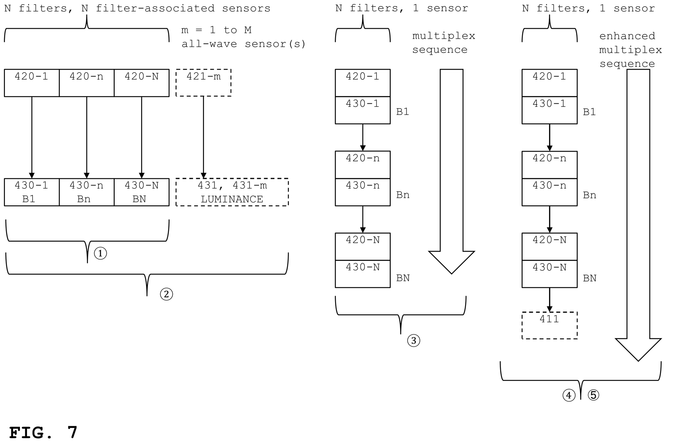

It is again noted that the filters are single-state filters in the sense that a particular filter keeps its transmission characteristics (cf. [T]) unchanged, at least during a single measurement (cf. steps 430 and 440-n in FIGS. 5 and 7).

**Filters and conductors**

With details to be explained, the filters transmit light in a transmission that is wavelength- specific. In some implementations, the filter approach further applies light transmitting elements that pass "all-wavelengths" by a transmission that is substantially wavelength-non-specific (lambda isotrop). The description supports that differentiation by using terms such as "light conductor" and "neutral filter".

**Decoding**

Data consumer 103 implements a decoder function from {D}, cf. decoder function 106 in FIG. 19 for an overview. Consequently, data link 102 does not have to transmit K data points (as in the spectroscope approach), but only spectral distribution identifier {D} (250/270 in FIG. 3), with only N < K data points. The filter approach may therefore offer advantages for data links with bandwidth limitations.

Data consumer 103 decodes {D} such that it re-establishes particular spectral distribution 310 to particular spectral distribution 390. Simplified, the decoder function matches particular distribution identifiers {D} to particular spectral distribution 390.

The accuracy of that matching is such that data consumer 103 derives information regarding physical object 110. Ideally, encoding parameters 351, 352, 353 and 354 are also applicable as decoding parameters, but in some use-cases decoding can use parameters that would decrease the re-establishment accuracy.

The decoder function can be implemented, by techniques such as

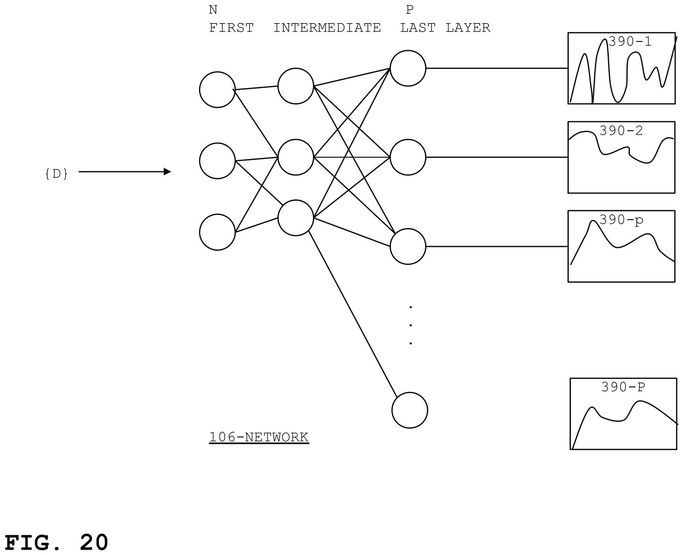

- machine learning (cf. details in FIG. 20)

- lookup tables, database queries, etc.
- recursive fit function, etc.

In other words, in the filter approach, a particular spectral distribution is being encoded with a set of different transmission-modulating filters (mostly non-blocking filters, details in FIGS. 11-14), that are arranged in the light path from the light source (or from object 110) to the sensor. Decoding recovers the spectral distribution (substantially at least to be suitable for consumption) by a re-constructor (i.e., the decoder function) that can be implemented by machine learning or the like.

**Encoder**

FIGS. 3-6 illustrate the filter approach to encode particular spectral distribution 310 of light 210 into spectral distribution identifier 250/270 (vector {D}) with more detail. FIGS. 3-4 introduce system components (for the encoder function), and FIG. 5 illustrates method 400 that is being performed when light 210 arrives.

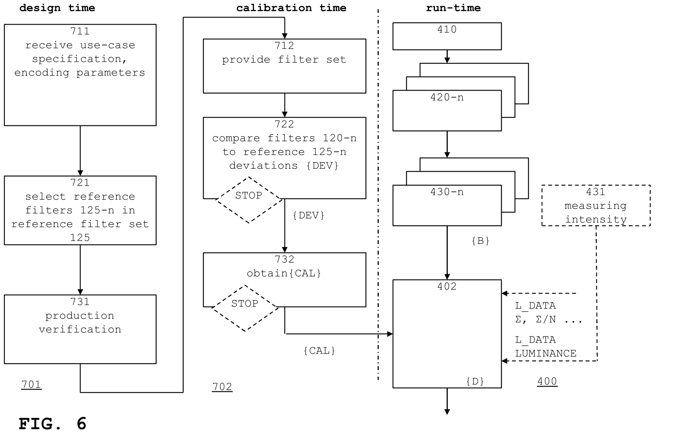

It is convenient to keep in mind that the filter approach implies activities to be performed before light 210 arrives. FIG. 6 presents method 400 into the context of

- a design time (activities to design reference filters, reference 701) and
- a calibration time (activities to consider deviation to the reference filters, reference 702).

As in FIG. 3, encoder function 105 is implemented by hardware components (left side of the figure) and by software components (or "computation functions", right side of the figure).

- The hardware components are filter set 120 (with filters 120-1, 120-n, 120-N, cf. FIG. 2) and sensor 130. The hardware components provide provisional intensity vector {B}.
- The software components are - in a first alternative - mapper 140 and divider 150, and - in a second alternative - divider 160 and mapper 170.

The software components process provisional intensity vector {B} by using auxiliary data to compensate for variation constraints:

- mapper 140/170 processes {CAL} to compensate for a filter variation constraint, and
- divider 160/150 processes L_DATA to compensate for an intensity variation constraint (or "luminance constraint").

The software components in combination can therefore collectively called variation compensators (compensators 140/150 and 160/170). The software components provide spectral distribution identifier 250/270.

**Hardware components**

The description goes from left to right, and occasionally refers to method steps (method 400, cf. FIG. 5). Physical object 110 provides light 210 (by emitting, transmitting, reflecting etc.). Light 210 has wavelength-specific intensity A within wavelength range ($\lambda$_min, A_max) as already introduced in FIG. 1.

Filter set 120 comprises N filters 120-1, 120-n, 120-N, with N being at least N = 3. Filters 120-n filter light 210 separately. Each filter 120-n in set 120 has a filter-specific transmission function Tn (shown as T1, Tn and TN, or {[T]} collectively), with wavelength-specific transmission Tnk. As used herein, "transmission" stands for the intensity ratio between outgoing light and incoming light: Tnk = A_out_k / A_in _k.

Alternatively, the transmission function Tnk can be considered to be a "transfer function" or "wavelength dependent transparency property". The graphical representation of the function could be the "conversion efficiency curve".

The N $\geq$ 3 filters in filter set 120 comply with the above-described uniqueness conditions (i.e., with a minimal set of conditions). As the conditions are too complex to be illustrated by a single figure, FIG. 3 merely symbolizes them by two symbols:

- The first symbol has two dashed vertical lines, and it illustrates that for any two wavelengths k and q, {T}k can be different from {T}q. The vertical lines have different heights (in k and in q), not only for T1, but also for Tn and TN. Some exceptions apply. (The difference is established if at least one element of the vectors (at vector position n) is different in both vectors. Further explanations will be given with FIGS. 11-14)
- The second symbol has a dashed horizontal line, and it illustrates that the transmissions Tk (as T1k, Tnk, TNk) would be above a particular threshold 340. The filters would not block all incoming light but would pass at least a certain fraction. As this illustration is a symbol only, exceptions apply here as well (cf. FIGS. 11-14).

Filters 120-n provide filtered light 220-n, individually (i.e., separately).

Sensor 130 measures the intensity of filtered light 220-n separately per filter 120-n, and obtains - separately as well - provisional intensity values Bn. Simplified, Bn is the integral of the light intensity (filtered) A over the wavelength range ($\lambda$_min, $\lambda$_max). Bn is a numerical value (because sensor 130 functions as an ADC). Bn is provisional (in the sense of being intermediate, not-yet-finalized to be used as code, or spectral identifier). For all N filters 120-n, the provisional intensity values Bn can be written as provisional intensity vector {B}.

In view of the uniqueness conditions, vector {B} would be unique for all members of set 315 (cf. FIG. 1), but would not allow matching by the decoder function to re-establish the spectral distribution (310 to 390). However, the software components on the right side of the figure step in here, they process {B} as explained next. In other words, the software removes the provisional character to make the vectors final.

**Constraints**

Encoding particular spectral distribution 310 of light 210 involves measures to mitigate the mentioned two variation constraints.

More in detail, regarding the filter variation constraint, filters 120-n may be different in their transmission functions Tn from a reference function (of reference filter 125, cf. FIG. 2). There is a variety of reasons, such as manufacturing variations. In other words, individual filters 120-n are variant in their transmission function (in comparison to a reference transmission function, of reference filter 125-n, cf. FIG. 2).

For example, different filter sets 120 are designed as specified for a single reference filter set 125 (cf. FIG. 2) but manufactured separately. For the same light (i.e., light 210 that is received), the variations would cause sensor 130 to provide different coding, such as for example {B} = {12, 23, 16} for a particular first filter set 120, or {B} = {13, 23, 16} for a particular second filter set 120.

In the example, vector element B1 is different, and that difference potentially may prevent the decoder function from correctly re-establishing the spectral distribution.

Regarding the light variation constraint ("luminance constraint"), the overall intensity of light 210 may vary (for repetitions in performing method 400), but spectral distribution 310 would be the same (if amplitude offsets would be ignored).

For example, {B} = {13, 23, 16} could be measured for relatively "weak" light, and {B} = {23, 33, 26} could be measured for relatively "strong" light. As both vectors would represent the same spectral distribution, the encoding with {B} would be different for different light intensity. Consequently, the decoder function would re-establish the spectral distribution differently.

As a consequence, from both constraints, vector {B} does not yet provide the encoding (because it does not yet identify spectral distribution). {B} is therefore a provisional vector.

**Software components**

The figure illustrates computing functions 140, 150, 160, 170 that provide spectral distribution identifier 250/270 that encodes particular spectral distribution 310 of light 210. Simplified, the computing functions mitigate the variation constraints (i.e., as variation compensators),

- by using calibration data {CAL} and a mapping step 440/470 and
- by using an intensity reference value L_DATA and a dividing step 460/450.

As the order of step execution does not matter, the computing function can be implemented in two alternatives:

- in the first alternative with mapper 140 and divider 150, mapping first, dividing second, and
- in the second alternative with divider 160 and mapper 170, dividing first, mapping second.

**Computation in the encoder (first alternative)**

In the first alternative (steps 440-n, 450-n), first computing function 140 ("mapper), in accordance with pre-determined calibration data ({CAL}), maps (440-n) the provisional intensity values Bn to calibrated intensity values Cn being the elements of a calibrated intensity vector {C}, and second computing function 150 ("divider") separately divides (450-n) the calibrated intensity values Cn of the calibrated intensity vector {C} by the intensity reference value (L_DATA), to calculate normalized calibrated intensity values Dn being the elements of a normalized calibrated intensity vector {D}. Spectral distribution identifier 250 is provided as the normalized calibrated intensity vector {D}.

**Computation in the encoder (second alternative)**

In the second alternative (steps 460-n, 470-n), third computing function 160 ("divider") separately divides (460-n) the provisional intensity values Bn by the intensity reference value (L_DATA), to calculate normalized intensity values Fn being the elements of a normalized intensity vector {F}, and fourth computing function 170 ("mapper") maps (470-n) the normalized intensity values Fn to calibrated normalized intensity values Dn being the elements of a calibrated normalized intensity vector {D}. Spectral distribution identifier 270 is provided as the calibrated normalized intensity vector {D}.

**Simplification**

Both alternatives provide the spectral distribution identifier. Either alternative can be implemented. As there is substantially no difference (for the decoder) between a "normalized calibrated" intensity vector (first alternative) and a "calibrated normalized" intensity vector, description and drawing use {D} for both (i.e., identifier 250/270).

**Implementation of the computing functions**

The skilled person can implement the computation functions by selecting appropriate technology. Orientation is available according to use-case scenarios, especially to the other factors. For use-cases with real-time requirements, the skilled person can consider even to use a field programmable gate array (FPGA) or an application-specific integrated circuit (ASIC). For use-cases with relatively large amounts of data (images over large object areas), real-time requirements may be less important so that the computing functions could be better implemented by CPU/GPU.

The same considerations apply for other computations, such as for calculations that provide {CAL} and L_DATA to the computing functions 140/150, 160/170.

**Obtaining auxiliary data {CAL}**

Shortly referring to FIG. 6, calibration data {CAL} becomes available (before receiving light in step 410) by a process that involves to measure filter deviations. Such filter deviations of filters 120-n can be obtained by comparing them to reference filters 125-n (cf. FIG. 2).

Calibration will be explained with more details below.

**Obtaining L_DATA by measuring**

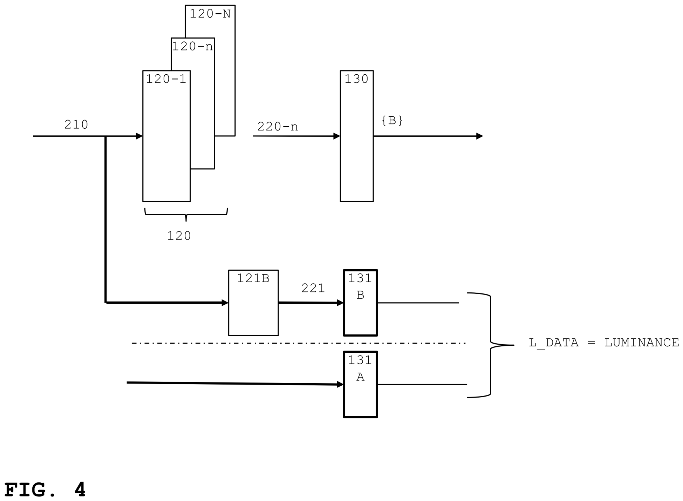

FIG. 4 illustrates some of the hardware components of FIG. 3, with an additional sensor 131A/131B to obtain L_DATA by measuring the luminance.

In other words, in both alternatives (cf. FIG. 3), intensity reference value L_DATA can be obtained by measuring the intensity of light (210, step 431) by sensor 131A/131B. This corresponds to method step 431 (measuring intensity as LUMINANCE).

As in FIG. 3, received light 210 goes to the filters 120-n of filter set 120, the filtered light 220-n goes to sensor 130 that provides provisional intensity vector {B}.

As illustrated in FIG. 4 by bold lines, light 210 goes to sensor 131A/131B that provides L_DATA. There are two options:

- According to a first option (A), light 210 is being received and forwarded to sensor 131A directly (i.e., bypassing filter set 120).
- According to a second option (B), light 210 is being received and forwarded to sensor 131B indirectly via a neutral light conductor 121B. Sensor 131B measures (step 431) the intensity of light 210 with correcting the loss introduced by neutral light conductor 121B.

**Obtaining L_DATA by calculating**

Shortly looking back to FIG. 3, intensity values (such as Bn measured by sensor 130) can be processed, for example, to obtain L_DATA by averaging or otherwise.

As L_DATA becomes the input to divider 150/160 (cf. FIG. 3), the two alternatives of FIG. 3 provide slightly different options to calculate L_DATA.

In the first alternative, second computing function 150 ("divider") can obtain the intensity reference value L_DATA

- by processing the provisional intensity vector {B}, or
- by processing the calibrated intensity vector {C}.

In the first alternative, second computing function 150 can obtain the intensity reference value (L_DATA) by calculations, selected from the following:

- calculating the intensity reference value (L_DATA) as the sum $\Sigma$ of the provisional intensity values Bn (or as the sum $\Sigma$ of the calibrated intensity values Cn),
- calculating the intensity reference value L-DATA as the average $\Sigma/N$ of the provisional intensity values Bn (or as the average $\Sigma/N$ of the calibrated intensity values Cn), and
- calculating the intensity reference value L_DATA as the median of the provisional intensity values Bn (or as the median of the calibrated intensity values Cn).

In the second alternative, the computing function 160 ("divider") can obtain intensity reference value L_DATA) by processing the provisional intensity vector {B}, by calculations, selected from the following: calculating the intensity reference value L_DATA as the sum $\Sigma$ of the provisional intensity values Bn, calculating the intensity reference value L_DATA as the average $\Sigma/N$ of the provisional intensity values Bn, and calculating the intensity reference value L_DATA as the median of the provisional intensity values Bn.

FIG. 5 illustrates a flow chart for method 400 to encode spectral distribution of light 210 from physical object 110 into spectral distribution identifier 250/270. The description also refers to FIGS. 3-4.

In receiving step 410, at least one filter 120-n that belongs to filter set 120 receives light 210 from physical object 110. As already explained, light 210 has a spectral distribution expected to be within set 315.

That means, light 210 has a wavelength-specific intensity Ak in particular spectral distribution 310 within wavelength range 351 from minimum wavelength A_min to a maximum wavelength A_max. This does not mean that Ak must be known.

In filtering step 420-n, light 210 is being filtered, resulting in filtered light 220-n. Filtering 420 is performed separately for each filter 120-n. Filters 120-n in filter set 120 comply with the uniqueness conditions (cf. FIG. 4, FIGS. 11-14).

In measuring step 430, sensor 130 measures the intensity of filtered light 220-n to obtain provisional intensity values Bn. As the index n indicates, the provisional intensity value is filter-specific. Bn is provisional in the sense that it does not yet represent the reality. The decoder function would not be able to re-recognized the spectrum. In vector notation, sensor 130 provides provisional intensity vector {B} = {B1, Bn, BN}.

Filtering 420 and measuring 430 steps are performed for each filter separately.
FIG. 5 shows two principal options with

- using N filters in steps 420-1, 420-n, 420-N, and using N sensors in steps 430-1, 430-n, 430-N, or
- using N filters and 1 sensor with multiplexing (steps 420-1, 430-1 resulting in B1, steps 420-n, 430-n resulting in Bn, steps 420-N, 430-N resulting in BN).

The two options match the two principal implementation options for filters and sensors (e.g., chromosaic with N sensors, filter wheel with one sensor)

The following steps mapping 440-n/dividing 450-n (first alternative) and dividing 460-n/470-n) have already been explained with FIG. 3. The steps result in {D} that serves a spectral distribution identifier 250/270.

Having explained the filter approach by introducing encoder function 105 (in FIGS. 3-4) and introducing an encoding method (FIG. 5), the description now discusses the implementation with further detail.

It is noted that method steps 410, 420 and 430 are defined as method 401 and that steps 440/450 and 460/470 are collectively called sequence 402 ("providing a spectral distribution identifier").

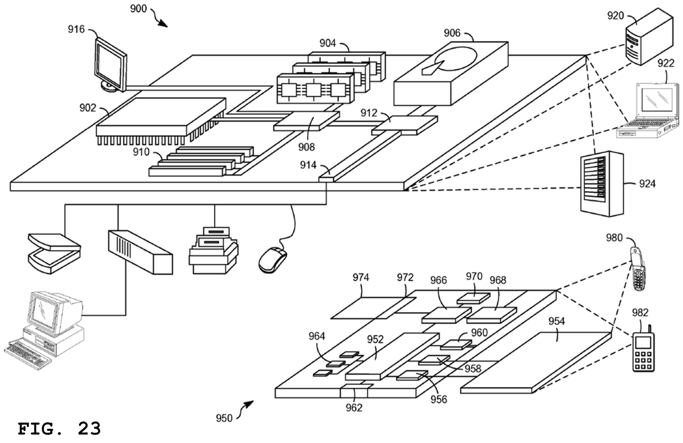

This pro-forma separation into hardware steps and software steps is convenient to explain a particular use-case scenario (FIG. 23) and to explain the procurement of auxiliary data {CAL} and L_DATA (cf. FIG. 6).

**Method, and step sequences in preparation**

FIG. 6 presents method 400 in the context of a design time (activities to design reference filters, activity sequence 701) and calibration time (activities to consider deviation to the reference filters, in sequence 702).

The figure repeats method 400 with steps 410, 420-n, 430-n and sequence 402. Step 431 measuring intensity has already been explained (to be used by an option to measure L_DATA.

Looking at the right side of box 402, as a result from step 431, L_DATA is available (to the divider computing functions) by measurements. Without referring to a particular step, L_DATA can be obtained by calculations, as outlined above.

**Identify reference filter set at design time**

Step sequence 701 explains the identification of reference filter set 125 with reference filters 125-n that comply with the uniqueness conditions (cf. FIG. 2).

As in step 711, parameters 351, 352, 353, 354 are obtained (i.e., identified according to use-case scenarios). In other words, the step refers to receiving the use-case specification.

As in step 721, reference filter set 125-N is identified (i.e., identified), there are - in principle - two options:

- For a set of filters that physically exist and for that the transmission function {[T]} is known (e.g., by measurement with the spectroscope approach), the uniqueness conditions are being checked numerically, for example by simulating light for substantially all members in set 315 (cardinality P, cf. FIG. 1), applying the simulated light to the filters, and the check if all {B} (for all P or for the sub-set) are unique. In case of uniqueness, the filter set is selected as a candidate to become reference filter set 125.
- If a set of a filters is not yet known, the simulation is performed for all members of set 315 (or for a random sub-set of set 315), but also for possible variations of filters transmission functions {[T]}. A suitable function {[T]) that is identified to comply with the uniqueness condition provides a candidate to become reference filter set 125.

As in step 731 "production verification", it is verified that such filter could actually be reproduced (first option) or produced (second option). For example, the transmission function may show a certain filter steepness (relatively large change in Tnk over a relatively narrow wavelength difference, such as for example Tnk = 2* Tnq, with q-k < 10). Potentially such filters could actually not being produced. In such cases, the simulation is repeated with other settings, or an existing filter set is not considered to serve as reference

In other words, step 731 turns filter set candidates into reference filter sets.

When reference filter set 125 has been designed (step sequence 701 with steps 711, 721, 731), filter sets 120 can be manufactured (according to reference filter sets 125).

It can be expected that reference filter set 125 and filter set 120 are not physically the same. As individual filters 120-n would show some minor manufacturing variations (against reference filters 125-n in set 125), calibration data has to be obtained.

Looking at the left side of box 402 (the last step of method 400), calibration data {CAL} is provided by sequence 702 with steps 712, 722 and 732.

- As in step 712, filter set 120 is provided (as physical filters that are manufactured to match reference filter set 125).
- As in step 722, filters 120-n are each compared to reference filters 125-n of reference filter set 125. As a result of this comparison, deviations {DEV} are identified (i.e, as a vector with elements for each of the N filters). The description provides details by explaining FIG. 15-17 below.
- As in step 732, the deviations are being processed to obtain calibration data {CAL} that is input to step sequence 402. In the simplified case, {CAL} is just the inversion or the negation of {DEV}. For example, if a particular reference filter set 125 would lead to {B} = {12, 23, 16} and the filter set 120 would lead to {B} = {11, 24, 17}, calibration data would be {1, -1, -1}. Mapper 140/170 would provide the correct values (cf. to {C}, to {D}), calibration by adding vector elements is just an example for mapping.

Step sequence 702 is performed prior to performing method 400, and but sequence 702 does not have to be performed every time. In many cases it can be sufficient to obtain {DEV} and {CAL} once and to use {CAL} for every call to steps 440/470 (mapping).

Step sequence 702 can lead to a STOP at (at least) the following occasions. Stop-criteria are available at calibration time:

- The deviations {DEV} can be relatively large so that the uniqueness conditions can not be complied with (for filter set 120). This could be established by testing, such as be applying tests as in step 721.
- {CAL} may to be available for certain {DEV}.

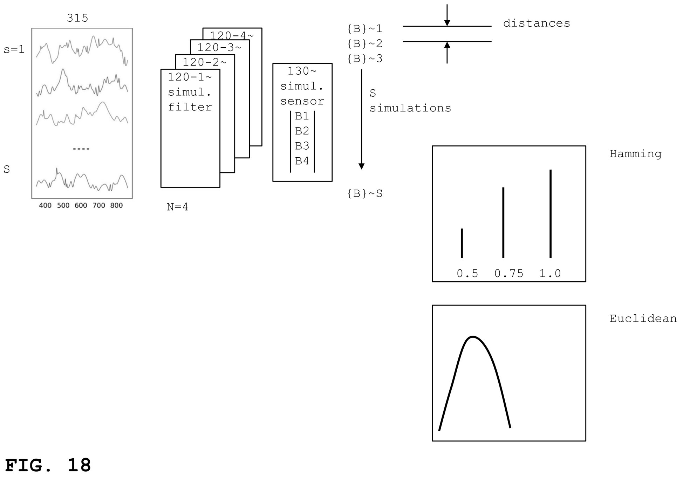

As mentioned, other stop-criteria are available at design time, cf. FIGS. 11-14, also the simulation in FIG. 18). The description explains them separately for design time and for calibration time, but this just a convenient way to explain them. Combining criteria is possible. For example, manufacturing variations could be anticipated (before manufacturing) so that such variations could be considered at design time. It is possible to check the uniqueness conditions for anticipated filter variations as well.

Further below, the description provides further details, among them design rules (to provide uniqueness, cf. FIGS. 11-14), simulation and numeric experiments (FIG. 18) can be applied at design time 702 as well.

**Methods in view of the implementation options**

FIG. 7 illustrates details for filtering (steps 420) and measuring (step 430) in view of different implementation options for the filters and for the sensor(s). Steps can be presented by filter indices n = 1 to N, here given as {1, n, N}.

As in case ① there are N filters and N filter-associated sensors. In other words, there is one sensors for each filter. The steps 420-n and 430-n are performed in parallel. This case is typical for the above-mentioned chromosaic implementation.

As in case ②, there are N filters and N filter-associated sensors as well, but in addition to that there are M all-wavelength sensors (i.e., sensors 131A or 131B of FIG. 4). These sensors measure luminance and provide LUMINANCE (cf. step 431 as explained with FIG. 6). LUMINANCE is used as L_DATA.

As in case ③, there are N filters and one sensor (cf. sensor 130 in FIG. 3). The steps 420-n and 430-n are executed in a multiplex sequence with N measurements, cf. FIG. 5 right side. This case is conveniently applied in the above-mentioned filter wheel approach. L_DATA would be obtained by calculation (as explained).

L_DATA can be obtained by measurement, but in such cases, the sequence would be enhanced by at least one extra measurement: ④ and ⑤.

As in case ④, the are N filters and one sensor, but also M sensors (m=1 to M) as sensor 131A (cf. FIG. 4). Conveniently there is M = 1 sensor only. The multiplex sequence is enhanced to a sequence with N + M measurements, in the easiest case N+1. The extra measurements is that for LUMINANCE. For convenience, the figure also uses reference 431-m, because there are M sensors.

As in case ⑤, there is no change in the flow chart, but an implementation with neural filter 121B and sensor 131B, again M (or M=1).

Having differentiated both options in view of method execution, description and drawing explain them by looking at the hardware (filters and sensors) in FIGS. 8-9.

FIG. 8 illustrates filter-and-sensor arrays in different views:

- top, in side-view (X-coordinate from left to right) with Z standing for the direction of light;
- below, in view from above to the XY-plane of the array.

Light 210 arrives at light splitter 104, goes through filters 120-n and arrives at sensors 130-n.

There are two implementations (left and right sides of the figure).

- The first implementation has sensors 120-n only (n=1 to N), leading to vector {B} only. L_DATA is calculated. The implementation corresponds to case ① of FIG. 7.
- The second implementation has sensors 120-n (n=1 to N) as well as neutral filter 121B and M sensors 131-B, leading to vector {B} but also to LUMINANCE (in the function of L_DATA). The use of the neutral filter is convenient because it would be manufactured similar as filters 120-n. The implementation corresponds to case ② of FIG. 7. (The figure shows filter 121B/sensor 131B in side-view only symbolically, it may be hidden from side-view).

The view from above shows multiple rows with N filters for the first implementation, i.e., filters 120-1, 120-n and 120-N in a first row (e.g., Y=1), and filters 120-1', 120-n' and 120-N' in a second row (e.g., Y=2). The rows intrinsically provide LOCATION_DATA.

The view from above shows a zig-zag arrangement of the N filters for the second implementation, but M = 3 filters 121B, 121B', and 121B" (plus corresponding sensors 131B). The arrangement looks similar to a chess-board. Having multiple LUMINANCE sensors 131B is convenient to measure light intensity over the wavelength range more efficiently and more accurately than with a single sensor.

**Multiplexing**

Measuring (430-n cf. FIG. 7) the intensity of filtered light 220 can be performed for each filter 120-n sequentially in a multiplex sequence with a single sensor.

FIG. 9 illustrates overviews to filter arrangements to apply multiplexing the filtering and the measuring steps. In parts (A) and (B), the figure focuses on the number of filters:

- arrangement (A) has N filters 120-1, 120-n and 120-N in array 128-BLOCK,
- arrangement (B) has N filters 120-1, 120-n and 120-N but also with one ore more light conductors 121A/121B (conductor 121A would be a "no filter", conductor 121B would be the neutral light conductor of FIG. 4), in array 129-BLOCK. A different term for "neutral light conductor" is "neutral light filter".

Filters 120-N (and conductors 121A/121B) move in a direction that is substantially perpendicular to the direction Z of light 210. During a measurement time interval, light 210 passes one filter and arrives (as filtered light 220-n) at sensor 130/131A/131B.

In arrangement (A) sensor 130 provides {B} with the elements Bn separately at the end of each time interval when filter 120-n passes light 210. In arrangement (B), sensor 130 provides {B} but also LUMINANCE. Sensor 130 has the function of sensor 130 in FIG. 3 to provide {B} but also has the function of sensor 131A/131B in FIG. 4 to provide LUMINANCE.

The skilled person is able to synchronize filter movement so that the sensor output matches the corresponding filter. Regarding the above-mentioned single-state condition, the movement speed of the filters is limited so that during the time interval the sensor measures the light, it receives light from one filter only.

In other words, to filter (step 420-n) received light 210 in the sequence, the separation in execution can be provided by having filters 120-n (of filter set 120) arranged as moving filter array 128-BLOCK or 128-WHEEL so that for one execution of filtering step 430-n, received light 210 goes to single sensor 130 through one filter (120-n) only.

The multiplex sequence with single sensor 130 can be enhanced with single sensor 130 also measuring the intensity of received light 210 as LUMINANCE. In such implementations, moving filter array 129 (cf. pat (B) has two implementations approaches.

- In the first approach, moving filter array 129-BLOCK further comprises gap 121-B for passing received light 210 directly to the single sensor (in the function of sensor 131A, cf. FIG. 4). The neutral light conductor is just an air gap.
- In the second approach, moving filter array 129-BLOCK comprises a neutral light conductor 121B (cf. FIG. 4) that passes received light 210 to the single sensor (in the function of sensor 131B, cf. FIG. 4).

FIG. 9 also differentiates two basic movement approaches, moving the filters linearly as 128-BLOCK or 129-BLOCK as in parts (A) and (B), as or 128-WHEEL/129-WHEEL as in part (C). For the filter wheel approach in part (C), the filters would move around a circle center, otherwise the same teaching for the 128-BLOCK and 129-BLOCK apply. In both approaches, light 210 arrives in Z direction perpendicular to the movement direction (movement direction is tangential in the wheel implementation).

The moving filter array can therefore be implemented, selected from the following:

- a filter wheel (128-WHEEL, 129-WHEEL) by that the filters (120-n etc.) are arranged along a circle, wherein the filter wheel as a whole (128-WHEEL, 129-WHEEL) rotates around the center of that circle, or
- a filter block (128-BLOCK, 129-BLOCK) by that the filters (120-n etc.) are arranged along a line, and wherein the filter block moves in linear direction (cf. parts (A) and (B)).

**Multiple filters and sensor in an array**

FIG. 10 illustrates an arrangement of multiple filters and multiple sensors (many-to-many) in a view from above and in side-view.

This arrangement is part of device 800 that is adapted to encode particular spectral distribution 310 of light 210. Light 210 arrives in direction Z.

Device 800 offers an implementation that selects design options in the following:

- The intensity reference L_DATA of light 210 is obtained by measuring and not by calculating (although calculations could be used as well)
- There are no moving parts, but N filters and N filter-associated sensors as well as M all-wavelength sensors (cf. sensors 131A, 131B).
- The execution of method 400 applies the steps in parallel (cf. the left side of FIG. 7).
- Filters and of light conductors can be manufactured by similar manufacturing step (cf. the reference to thin films, further below in this description).

Device 800 comprises filter layer 825 that is attached to a sensor layer 835. Filter layer 825 and sensor layer 835 are planar layers. Filter layer 825 is adapted to receive light 210 on its surface (cf. coordinates XY in a view to the device from above) and to forward the received light 210 to sensor layer 835.

Filter layer 825 and sensor layer 835 are divided into disjunct pixel locations 850-xy that correspond to sensors 830-xy and that correspond to filter locations 823-xy.

Sensors 830-xy are adapted to quantify the intensity (cf. acronym A in FIG. 1) of the forwarded light by integrating it (cf. FIG. 15) during a measurement time interval to provide sensor-specific provisional intensity values that represent the transmitted light (220). These intensity values are Bn (in vector {B} and LUMINANCE).

For a contiguous combination of M pixel locations - area 880 hereinafter-the following applies, for N < M:

- N filter locations 823-xy hold a set 823-21, 823-12, 823-32, 823-23 of $N \geq 3$ filters above the corresponding sensors 830-21, 830-12, 830-32, 830-23, so that the corresponding sensors provide the sensor-specific intensity values as provisional intensity values Bn. The example of FIG. 10 shows N = 10 such locations.
- M-N filter locations 823-11, 823-31, 823-22, 823-13, 823-33 are either empty (cf. "gaps" in FIG. 9) or hold filters with a wavelength non-specific transmission function (cf. conductor 121B in FIG. 4), so that the corresponding sensors 830-11, 830-31, 830-22, 830-13, 830-33) provide the sensor-specific intensity values as luminance values LUMINANCE (cf. FIG. 4, sensor 131A/131B). The example of FIG. 10 shows M = 5 such locations (cf. the acronym "w" for "white").

The N filters (e.g., 823-21, 823-12, 823-32, 823-23) correspond to filters 120-n of filter set 120 can comply with the already introduced uniqueness conditions.

Device 800 further comprises a calculation module with calculation functions 840, 850, 860, 870. The module processes provisional intensity values Bn to normalized intensity values Dn being the elements of a normalized intensity vector {D} that becomes a spectral distribution identifier 250/270 that encodes the particular spectral distribution 310 of received light 210.

The above-introduced two alternatives of FIG. 3 apply as well. The first alternative uses calculation functions 840 ("mapper") and 850 ("divider") shown left to a dashed-dot-line, and the second alternative uses calculation functions 860 ("divider") and 870 ("mapper").

L_DATA is obtained as LUMINANCE (measured by the M sensors, also cf. FIG. 4 and FIG. 6 step 431), and {CAL} is obtained as described above (cf. FIG. 3, FIG. 6). In that sense, device 800 offers a simpler design because calculating L_DATA from {B} as in FIG. 6 (cf. the $\Sigma$ calculations) is not required.

In other words, for the first alternative, calculation module 840/850 in device 800 is implemented such that mapper 840 is adapted to use pre-determined and device-specific calibration data {CAL} to map (step 440-n in FIG. 5) the provisional intensity values Bn to calibrated intensity values Cn being the elements of a calibrated intensity vector {C}, and implemented such that divider 860 is adapted to separately divide (step 450-n) the calibrated intensity values Cn of the calibrated intensity vector {C} by the luminance values LUMINANCE to obtain the normalized intensity vector {D}.

In other words, for the second alternative, calculation module 860/870 of device 800 is implemented such that divider 860 is adapted to separately divide (step 460-n) the provisional intensity values Bn by the luminance values LUMINANCE to obtain the normalized intensity vector {F}, and implemented such that mapper 870 is adapted to use pre-determined and device-specific calibration data {CAL} to map (470-n) the normalized intensity values Fn to calibrated normalized intensity values Dn of the normalized intensity vector {D}.

In both alternatives, vector {D} serves as spectral intensity identifier 250/270.

Calibration is device-specific in the sense that variations of the filters and of the sensors are taken into account.

**Thin film technology**

Persons skilled in the field of optical filter technology can implement the layers with various techniques that are known in semiconductor manufacturing. Sensor layer 835 can be designed similar to the sensor arrays in digital cameras, and the filter layer 825 is conveniently implemented by thin film technology.

The following book gives an overview to thin films: Knittl, Z. Optics of thin films. John Wiley, London 1981.

Regarding the above-mentioned single-state condition, it is noted that the thin films do not change during measurement.

The description now continues with explaining further implementation details.

**Uniqueness condition with details**

FIGS. 11-14 illustrate transmission functions, and thereby introduce design rules that apply when reference filters are selected in step sequence 701 (design time), especially activity 721 (cf. FIG. 6).

It is assumed that parameters 351, 352, 353 and 354 are already identified at this stage.

FIG. 11 illustrates the transmission functions for N = 3 filters 125-n in set 125. (The description refers to reference filters, but the rules apply for individual filters 120-n as well).

As already mentioned, the N filters in filter set 125 comply with the uniqueness conditions. The figure illustrates the filter-set transmission function {[T]} for with [T1], [T2] and [T3] (each with vector elements from k = 1 to K)

For each wavelength k, the filter-specific transmission functions can be concatenated to a concatenated transmission vector {T}k with N elements. The figure shows such a vector in the left side for k as vector {T1k, T2k, T3k), or collectively {T}k. On the right side it also shows the vector for q as vector {T1q, T2q, T3q), or collectively {T}q.

The concatenated transmission vector {T}k is unique for any wavelength k. In other words, for any two wavelengths k and q, {T}k is different from {T}q. The difference is established if at least one element of the vectors (at vector position n) is different in both vectors. For example, with {T}k being {20, 30, 40} and {T}q being {30, 30, 40}, the filter set differs in the transmission in that at least for one element (here for filter 1), the wavelength-specific transmission rates are different.

In the symbolic illustration of FIG. 3, the wavelength-specific $\lambda$ transmission ratios are above or equal to a transmission threshold 340-n for wavelengths $\lambda$k in wavelength range 351. The provisional intensity values Bn will have a minimal value (above zero). (This is simplified, sensors have a minimal sensitivity.)

The thresholds are illustrated by dashed lines at a particular rate T_threshold 340. The threshold can be filter-specific. In other words, each of the filters transmits light over the whole min/max range 351, but there is substantially no light blocking. From a different perspective, there is light attenuation over the whole range, but no blocking (no cutting off).

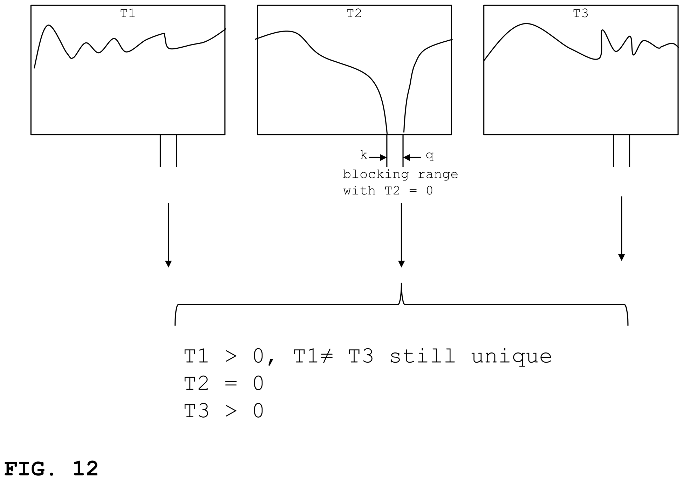

FIG. 12 also illustrates of the transmission functions for N = 3 reference filters 125-n in set 125, but shows that - for some sub-range - less than N filters can contribute to uniqueness.

The second filter shows a blocking range (between wavelength identified by k and q) in that transmission is substantially not available, the second filter would block the light. B2 (for the second filter) would not be zero for the second filters (because the sensor integrates light over the whole range). But for the blocking range, the spectral distribution within k and q would have to be encoded by the first and third filters only.

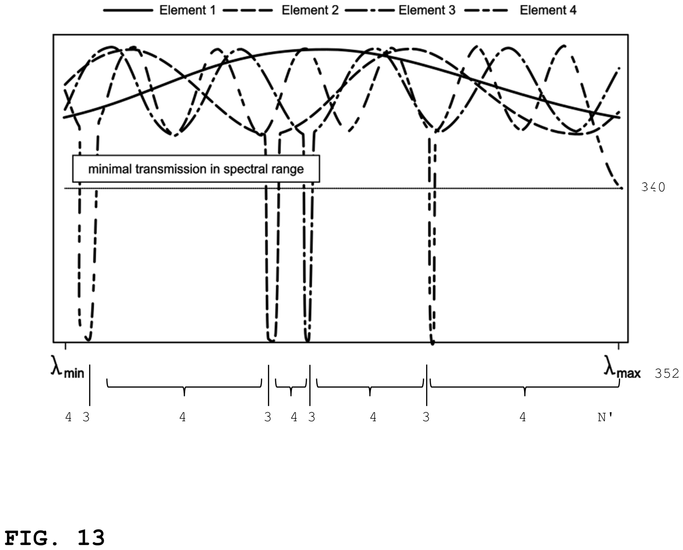

FIG. 13 illustrates transmission functions for an example with N = 4 filters 125-n in set 125, again with some modifications (labelled "Element 1" to "Element 4"). For most of the wavelength range (parameter 351), the transmission Tn is larger than a threshold. Threshold 340 is symbolized by a horizonal dashed line at about a transmission of T=0.5. In other words, the minimal transmission in spectral range 351 is 50%.

But some filters may have blocking ranges in that the transmission is substantially at zero (i.e., the sensor would not detect light after the filter). The figure shows that filter 124-4 (i.e., transmission function T4 has two relatively narrow blocking sub-ranges, and that filters 125-2 and 125-3 each have one blocking sub-range.

Looking from $\lambda$_min A_max, the number N' of filters that contribute to uniqueness (in the example) is 4, 3 (first blocking sub-range), 4, 3 (second blocking sub-range), 4, 3 (third blocking sub-range), 4, 3 (third blocking subrange), and again 4.

In general, if the transmission function of a particular filter has a constant value in a particular sub-range, it does not contribute to uniqueness. FIG. 13 shows such values as blocking values (T=0).

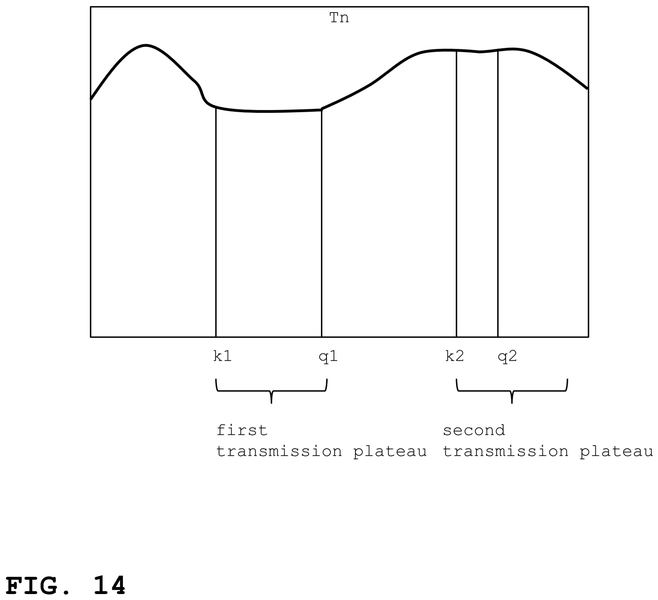

FIG. 14 illustrates of the transmission functions for a single filter 125-n. In some su-ranges, the transmission is constant over wavelength (symbolically, the transmission has a plateau). A function that has its graph substantially in parallel to the abscissa can also be described by its derivation that would be zero (i.e., dT/d$\lambda$ = 0).

The figure is simplified, and "constant" (or zero derivation) can be defined within a tolerance band.

In the example. the transmission shows a first transmission plateau between wavelengths k1 and q1 and shows a second transmission plateau between wavelength k2 and q2. The transmission is changing at wavelength outside the plateaus.

Plateaus can have two extrema:

- blocking plateaus (cf. the discussion in FIGS. 12-13)
- all-transmission plateaus (cf. the discussion for the "neutral filter")

To design filter sets, at least the following design rules can apply:

- Filter sets should be avoided in that two filters each have two plateaus in the same sub-range (cf. FIG. 13, the number N' would be N-2 for such sub-ranges).
- There should be a variance of filter transmission for at least for a sub-set of filters (N' < N), but sub-ranges with constant T for one or two filters would be allowed (simplified uniqueness).
- There should be T-combinations that are equal over the complete range 351 (strict uniqueness)

## Reference filters and individual filters: mapping step

However, reference filters 125-n may not be available for each measurement. The description has already explained (with FIG. 6, calibration time, step sequence 702) that the computing functions need to process calibration data {CAL}.

FIG. 15 illustrates a matrix with spectral diagrams (for range 351):

- with the first row showing spectral distribution 310 of the light that arrives at a filter,
- with the second row showing the transmission function of the filter, and
- with the third row showing the measurement of the filtered light (being distribution 320), by a sensor that integrates incoming light over the wavelength.

The column on the left of the figure is related to method step "measuring 430". Light 210 (cf. FIG. 3) has particular spectral distribution 310 (here normalized between 0 and 1). For simplicity, the figure shows an almost equal distribution (between $\lambda$\_min and $\lambda$\_max).

Filter 120-n should have transmission function Tn_individual (normalized as well). Again, to keep the illustration simple, it should be assumed that Tn_individual almost linearly increases with increasing wavelength. In the example, filter 120-n should be blocking at A_min (Tn_individual = 0) and should be translucent at $\lambda$\_max (Tn_individual = 1).

In this simplified example, filtered light 220 (cf. FIG. 4) should have spectral distribution 310, starting with low intensity from $\lambda$\_min and reaching medium intensity at $\lambda$\_max (almost as unfiltered distribution 310).

As already mentioned, sensor 130 (cf. FIG. 3) comprises an analog to digital converter. The sensor measures all the light that arrives during the measurement time interval, no matter what wavelength lambda is. In other words, sensor 130 just identifies the quantity of photons that arrive at the sensor (during the time interval). The area below line 321 corresponds to numerical output of sensor 130, the is provisional intensity value Bn.

Bn corresponds to the integral of the filtered light (intensity) between $\lambda$\_min and $\lambda$\_max.

In case that numerical values for distribution 310 would be known (e.g., measured by the spectrometer approach), they could be given as vector [A] (from k = 1 to K). In case that the transmission function Tn would be known as well, spectral distribution for filtered light 220 could be calculated by Tn*[A] for k=1 to K. Tn*[A] could be integrated, and the calculation would arrive at Bn.

However, filter and sensor are not computers that would calculate Bn exactly. The above-mentioned variation constraints apply.

The center column of the figure is discussed in the following, also in view of method step mapping 440/470 in FIG. 5. Again, there should be no change in distribution 310 (as in the left column).

Tn_reference is the so-called regular transmission function. In this simplified example, the manufacturer would define Tn as linearly increasing from 0 to 1, from $\lambda$\_min to $\lambda$\_max, as symbolized by the dashed graph. Of course, Tn_reference could be given for each k (from k = 1 to K). Tn_reference can be considered as a rated curve or as a reference curve.

There is a slight offset between Tn_individual and Tn_reference, from $\lambda$\_min to $\lambda$\_q, filter 120-n transmits more light than expected, from $\lambda$\_q to $\lambda$\_min it transmits less light than expected.

As a consequence, Bn as measured by sensor 130 (with filter 120-n) does not necessarily correspond to a value that could be expected from reference equipment (such as reference filters 125-n). The figure illustrates this by the areas between line 321 (Tn_individual) and line 322 (Tn_reference). The areas would have to be considered in terms of plus and minus.

As Bn is obtained by a filter (and by a sensor) that does not necessarily correspond to the reference filter (and reference sensor), adjustment might be required.

As illustrated by step 722 in FIG. 6, filters 120-n are compared to reference filters 125-n to obtain deviations {DEV}, from the measured deviations, calibration data {CAL} can be calculated as in step 732 (FIG. 6). For each particular measurement (step 430 in FIGS. 5-6), the adjustment is done in mapping step 440/470 by using {CAL}.

**Light intensity L_DATA, dividing step**

As indicated on the right side of FIG. 15, the received light has a particular spectral distribution 310' (normalized between 0 and 1), but the overall intensity of light is different (compared to 310 on the left and center column). In the example, the light has more brightness.

Distribution 310' therefore shows an offset to distribution 310: for all wavelengths A, the intensity of received light is higher by the same amount (it could also be smaller).

Filter 120-n keeps its transmission function (the function is not related to the intensity of light). Consequently, sensor 130 obtains Bn over a larger area (below line 321' that is different from the area below line 321).

In other words, there are two offsets to consider:

- The first offset is the difference between distributions 310' und 310: for all k, [A] in distribution 310' is [A]*factor.
- The second offset is the difference in the measured values Bn.

As the offset of distribution 310' varies from measurement to measurement (and can not be anticipated at design time (701 in FIG. 6) and not at calibration time (702 in FIG. 6), it is determined by determining L_DATA in step 431 (cf. method 400, FIG. 6). L_DATA (measured as LUMINANCE, or calculated) is the input of divider function 150/160 (cf. FIG. 3).

**Deviation pattern**

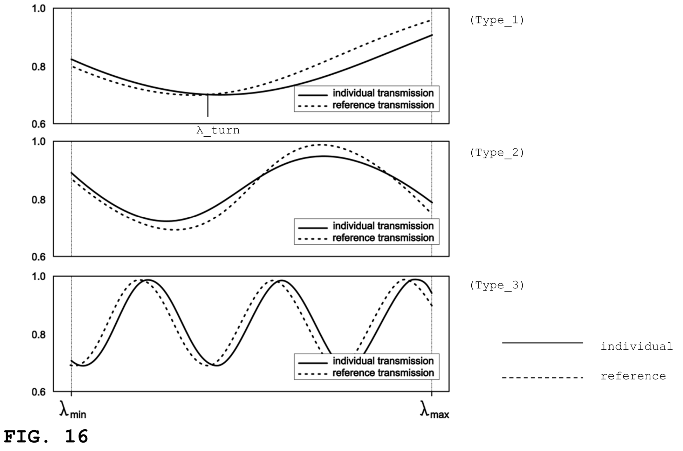

FIG. 16 illustrates the filter transmission functions Tn with 3 typical deviation patterns. For convenience - to save space on the drawing - Tn is illustrated between Tn=0.6 and Tn=1. Although the figure shows 3 curves (i.e., transmission functions), this is not N = 3.
The curves are illustrated for reference filters (dashed line, Tn_reference) and for individual filters (Tn_individual, plain lines). In other words, a particular filter 120-n has a transmission function Tn that is expected (or "reference"), but particular filter 120-n has an individual transmission function Tn (cf. Tn_individual in FIG. 15). T_individual can be measured (at least partially) so that the deviations can be identified.
In the calibration sequence 702 (cf. FIG. 6), step 722 (compare filters 120-n to reference 125-n and to obtain deviations {DEV}) does not have to be performed for each wavelength. It is possible to identify a deviation type and to obtain {CAL} in step 732 by applying the type.

- Deviation type (1) stands for an amplitude deviation. It shows an amplitude mismatch, with less transmission than regular from $\lambda\_min$ to $\lambda\_turn$, same transmission at $\lambda\_turn$, higher transmission from $\lambda\_turn$ to A_max, or vice versa.
- Deviation type (2) stands for a repetition pattern deviation. It is similar to type (1) but has more turning points.
- Deviation type (3) stands for a wavelength offset deviation. It is characterized by a lambda-shift. For any given wavelength $\lambda$ within A_min and $\lambda\_max$, T_reference (A) = T_individual ($\lambda$ + delta$\lambda$).

Delta$\lambda$ is not the same as $\Delta\lambda$ mentioned above.

**Examples**

By way of example, a reference filter set would provide {B}_regular = {0.9676, 0.8356, 0.9176} and an individual filters set 120 would provide {B}_individual = {0.9376, 0.8566, 0.9526}.
Filter 120-1 would provide B1 with $\Delta$B1 = 0.030 (i.e., would measure more than the rated filter), filter 120-2 would provide B2 with $\Delta$B2 = -0,021 (less than rated) and filter 120-3 would provide B3 with $\Delta$B3 = -0,035 (also less than rated).
It is possible to determine the deviation type of a filter by sample checking some of its values and to extrapolate the other values (if needed). It is also possible to determine deviation characteristics, such as $\lambda\_turn$ for types (1) and (2) and to determine delta$\lambda$ for type (3) etc.
Once the type is identified, {CAL} is easy to obtain, for example by applying one or more of the following:

- Identifying {CAL} from look-up tables
- Calculating {CAL} from $\lambda\_turn$, from sample-checked deviations at $\lambda$ with a certain distance $|\lambda\_turn- \lambda|$ and distance-specific corrections.

**Applying calibration data, in mapping**

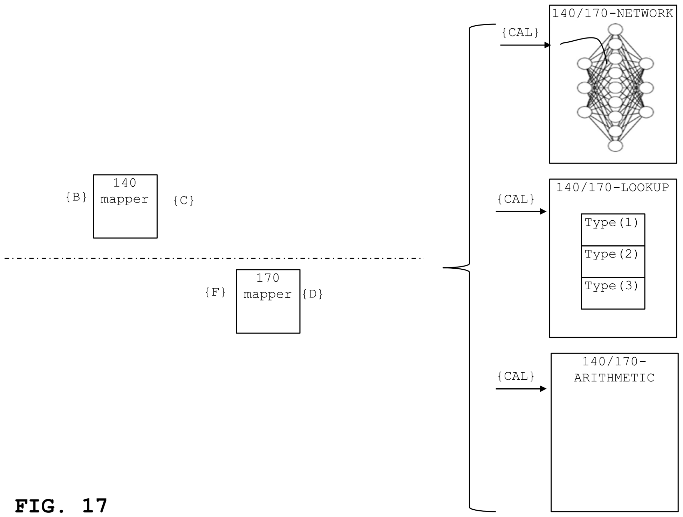

FIG. 17 illustrates the computing function 140/170 ("mapper", cf. FIG. 3) together with implementation options. Differentiating into the first and second alternatives is not required here.
The mapper receives {B} and provides {C} (alternatively {F} and {D}) and also uses {CAL}. As already explained, {CAL} becomes available at calibration time 702 (steps 722 and 732, FIG. 6).
In a first implementation, mapping is performed by a pre-trained neural network 140/170-NETWORK. The network weights are the result of training that involves {CAL} and/or deviation data {DEV}, cf. FIG. 6.
In a second implementation, mapping is performed by tables 140/160-LOOKUP. This implementation is convenient if the above-described patterns or types are applied (cf. FIG. 16).
In a third implementation, both neural network and look-up tables are combined.
In a fourth implementation, mapping is performed by simply applying arithmetic in 140/170-ARITHMETIC. An example has been mentioned for step 721 with {CAL} = {1,-1,-1} t be added to {B}.

**Revisiting uniqueness**

Having introduced to the design of reference filters 125-n (cf. design time) and having shortly referred to the particulars of using individual filters 120-n (that deviate from the reference filters 125-n, cf. the mapping step) and to different light conditions (considering L_DATA in dividing step), the description now re-visits the uniqueness conditions.

Such conditions can be verified by simulation. The description will focus on reference filters, but the results also apply to filters with deviations.

**Simulation**

FIG. 18 illustrates the set-up of numeric experiments to estimate a degree of uniqueness by simulation. The experiments showed that the implementation options comply with the uniqueness condition. Filter variations (cf. center column in FIG. 15) or luminance variations (right column of FIG. 15) are disregarded because they are unrelated to the uniqueness condition (or they are related only marginally).

A simulation computer has obtained a number of S distributions [A]~s that belong to set 315: from distribution [A]~1 to distribution [A]~S. In the example, the S distributions are random samples of elements in set 315.

The ~ symbolizes simulation, wherein a single ~ just indicates that a particular vector [A] (or other data vector) has been simulated.

The simulation computer processed each distribution [A]~s by applying a filter-set transmission matrix {[T]} to obtain intermediate values:

$$[A]\_filtered\_by\_filter\_1{\sim}1 = [A1{*}T11, ..., Ak{*}T1k, ..., AK{\sim}T1K]{\sim}1$$

$$[A]\_filtered\_by\_filter\_2{\sim}1 = [A1{*}T21, ..., Ak{*}T2k, ..., AK{\sim}T2K]{\sim}1$$

$$[A]\_filtered\_by\_filter\_n{\sim}s = [A1{*}Tn1, ..., Ak{*}Tnk, ..., AK{\sim}TnK]{\sim}s$$

$$[A]\_filtered\_by\_filter\_2{\sim}S = [A1{*}TN1, ..., Ak{*}TNk, ..., AK{\sim}TNK]{\sim}S.$$

Each of the N*S lines [A]_filtered would correspond to a line 321 in FIG. 321 (left column). FIG. 16 symbolizes simulated filtering by showing simulated filters 120-1~ to 120-4~ (i.e., N=4). In other words, the simulation computer has simulated N*S curves 321 in FIG. 15.

The simulation computer then integrated the intermediate values to simulated intensity values {B}~s = {B1, B2, B3, B4}~s for s=1 to s=S (by simulated sensor 130~). The values are not "provisional" because reference filters would have reference transmissions (for that {CAL} and mapping is not required).

With S = 32768 and N = 4, exemplary values are

$${B}{\sim}1 = {0.9543, 0.8765, 0.8932, 0.9701}$$

$${B}{\sim}2 = {0.9531, 0.7503, 0.7854, 0.8802}$$

The computer then calculated numeric distances between any possible pair of vectors {B}~s (i.e., S*(S-1) distances).

For the numeric distances it is convenient to apply the Hamming distance or the (simplified) Euclidean distance.

By definition, the Hamming distance /H/ between a vector pair is 1.0 if all vector elements are different, 0.75 if one vector element is equal, 0.5 if two elements are equal, 0.25 if three elements are equal, or 0.0 if all vector elements are equal. The simulation was performed here in the example with N = 4.

By definition, the (simplified) Euclidean distance /D/ between a vector pair is calculated as the sum of the difference amounts between the vector elements. For example, the differences (positive as amounts) are {0.0012, 0.1263, 0.1078, 0.0899} summing up to /D/ = 0.3253.

In the next step, a histogram was generated. The number of pairs was PAIR = $5.368 \times 10^8$ (i.e., approximately 500 million pairs). The number of occurrences for the /H/ distances, are obtained, for example:

/H/ = 0.00 in zero occurrences out of PAIR,
/H/ = 0.25 in zero occurrences out of PAIR as well,
/H/ = 0.50 in about 300 occurrences out of PAIR (6 per million),
/H/ = 0.75 in 850 000 occurrences out of PAIR (0.15 %),
/H/ = 1.00 in occurrences that almost reached PAIR (99.85 %).

A further histogram was generated for /D/ with, normalized to the highest /D/ of all S*(S-1) distances, showing a Gaussian peak at about 0.2 and showing the shortest /D/ of (normalized) /D/≈1 in only 0.1 percent of the occurrences.

Such or similar simulations can be performed at design time 702 (cf. FIG. 6), for example to select reference filter set 125 in step 721.

**Evaluation**

As the uniqueness condition would require the proof that something is missing (i.e., a pair of equal {T}k and {T}q), the applicant conducted numerical experiments with multiple simulation (of filter transmission properties etc.) and concluded that for practical implementations, the likelihood to have two equal pairs can be neglected.

**Transition to decoding**

The description now leaves encoding and turns to the decoding. As mentioned above, the components for decoder function 106 can be located in data consumer 103.

FIG. 19 illustrates decoder function 106 that performs method 600 for decoding. Simplified, decoding can be performed as computer-implemented method 600 that comprises:

- (step 610) to receive a particular spectral distribution identifier {D}, that has been generated by performing encoding method 400;
- (step 620) to map this particular spectral distribution identifier {D} to a particular distribution [E].

Intensity vector {D} is the distribution identifier 250/270 for distribution 310, and particular distribution [E] identifies distribution 390 (cf. FIG. 1). The description uses [E] (i.e., an amplitude vector with K amplitudes), but other identifiers could be used as well, such as names, character strings, numbers in a table or the like that are pre-assigned to particular distributions 390. It is not required to re-calculate the amplitudes in [E].

As spectral distribution 310 belongs to set 315 (cf. FIG. 1), an ideal decoder would re-establish the same set member, hence would identify one out of P distributions 390. (The cardinality P of set 315 would be the cardinality of the possible matches, 390-1, 390-p, 390-P.)

In many situations, [E] belongs to a set of known spectral distributions, such as for distributions that had been encoded before. In other words, source data (that has been encoded) turns into target data, or - from a use-case perspective, the information regarding the original spectral distribution is being re-established.

In the example of FIG. 19, vector {D} = {12 23 16} would lead to distribution 390-1 (same as 310 in FIG. 1).

**Options**

Mapping has a variety of implementation options (i.e., mapping options), among them the following:

- (look-up table) The computer can access data that represents predefined relations between one or more {D} and one or more [E]. The relations can be one-to-one (e.g., one {D} to one [E]), in one-to-many, or many-to-one, etc. The relation data can be provided by databases or the like (i.e., look-up tables, library).
- (recursive fit) The computer can simulate actions in the provider (such as the filtering and measuring steps in method 400) so that the computer can estimate the approximate distribution [A] of the received light. As explained above (cf. the explanation of design time 702 FIG: 6, and the numeric experiments, FIG. 18), simulation can lead to a plurality of code vectors, such as {B} or {D}. As each of the code vectors would be unique within its plurality, each particular vector can be associated with a particular [A]~ as simulated.
- (neural network) The computer can use a pre-trained neural network. The network can classify a received particular {D} to a pre-defined distribution [E]. The description explains an embodiment of such network with FIG. 20.

In principle, decoder function 106 can be implemented by any option alone or in combination. The choice of the option depends on constraints, with several aspects.

In a first aspect, the description discusses constraints and continues by investigating numbers (and indices):

- There are P different distributions [A] as explained with FIG. 1.
- There are P different distributions [E]

In use-case scenarios, the set cardinality P does not have to be preserved. The set cardinality P is related to the use of computing resources, memory consumption, processing durations and so on. Potentially, the decoder can introduce some rounding.

FIG. 20 illustrates a pre-trained neural network 106-NETWORK in decoder function 106 (cf. FIG 19). The skilled person can vary the implementations, but the following applies for such a decoder in general.

- The decoder network has a first layer (circle symbols at the left side for nodes) that receives spectral distribution identifier 250/270, i.e., vector {D}. As already explained, {D} has N vector elements (corresponding to the number of filters). Therefore, the first layer has at least N nodes.
- The decoder network has one or more intermediate layers that are connected to the first layer.
- The decoder network has an output layer with P nodes (or less nodes for reduced accuracy). The figure illustrates different distributions, and the network operates as a classifier: it receives {D} and classifies it to a particular distribution 390-p.

It is noted that the network is a part of the above-mentioned chain (from provider 101 to consumer 103, cf. FIG. 1). The number of P nodes at the output is dictated by the encoding parameters 351, 352, 353 and 354.

### Training the network

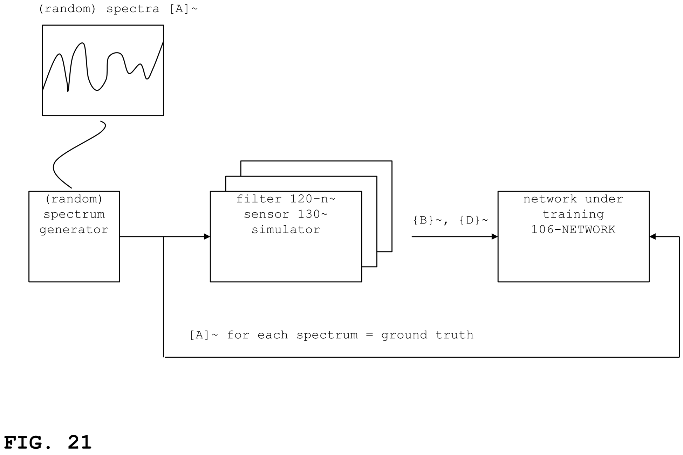

FIG. 21 illustrates some aspects on how neural network 106-NETWORK can be trained. Symbol ~ indicates that components are simulated.

A (random) spectrum generator provide a plurality of simulated spectral distributions [A]~. Instead of random spectra, it would also be possible to simulate set 315 (cf. FIG. 1, with cardinality P). [A]~ can also be regarded as pre-defined programmable spectral distribution, and [A]~ would be use-case specific according to encoding parameters 351, 352, 353 and 354 (cf. FIG. 1.)

Filters 125-n~ and sensors 130~ are simulated (for N as in real implementations). With the above mentioned calculations (amplitude values multiplied with transmission values, followed by integration cf. FIG. 15), the vectors {B}~ and {D}~ are calculated. In many situations {B}~ is the same as {D}~ because variations (filter variations, light intensity variations) do not occur (the simulated filters are reference filters), hence the computation functions 140/150/160/170 would not have to be simulated.

{D}~ goes to the first layer of network 106-NETWORK, and [A]~ goes to the last layer of network 106-NETWORK (as ground truth).

Alternatively, network 106-NETWORK can be trained with non-simulated data, such as with {B}, {D} and so on.

### Aspects of simulation and network training

Having illustrated the basic concept of implementing decoder 106 by a neural network, and to use simulation both for the design of filters (cf. FIG. 6 design time), and for training the network (cf. FIG. 20), the description now discusses some further aspects.

Simulation can approximate the ideal encoder and the ideal decoder, and the constraints in view of maximal numbers (such as cardinality P) are only a constraint in the number of calculations. But as the simulating computer is usually not the same computer that participates in encoding or decoding, that is not an implementation constraint.

(all source distribution simulation). The simulation computer can provide [A]~ for substantially all P members in set 315. Encoding parameters can be taken into account as required by use-cases.

(random distribution simulation). The simulation computer can provide [A]~ at random, resulting in a set of random distributions (i.e., less than P simulated spectra)

(noise distribution simulation). The simulation computer can process [A] (taken by measurements, for example, by data provider 101) and can add random variation (i.e., "noise"). This approach may make the network more robust against minor variations.

(filter simulation based on measurements). The transmission function [{T}] of a particular filter set 120 can be measured, but could also be simulated.

(filter simulation based on measurements). The transmission function [{T}] of a particular filter set 120 can be simulated by sampling measured transmission data, in that sense there is a hybrid between measurement and simulation.

### Implementing calibration into the decoder

It appears possible to train neural network 106-NETWORK separately for processing spectral distribution identifiers 250/270 that result from different individual filters. In other words, the mapping steps 440/470 could be skipped so that decoder function 106.

## Identify changes

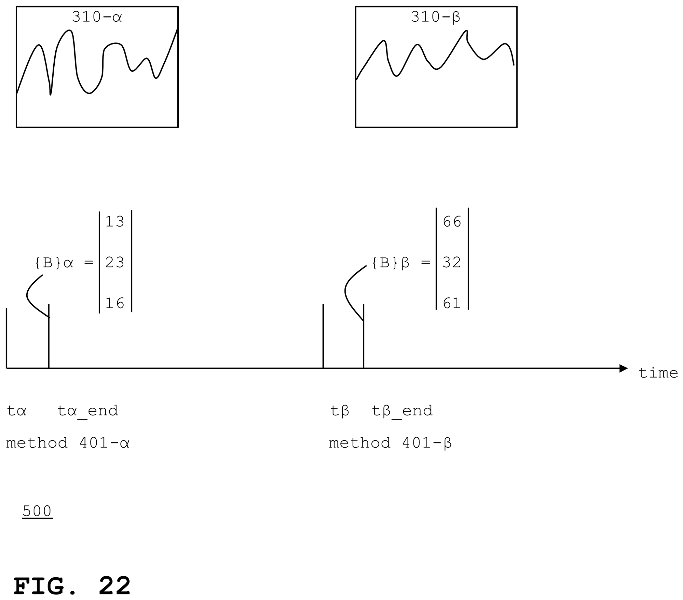

FIG. 22 illustrate a time diagram for method 500 to identify a change in the particular spectral distribution, by consecutively executing first and second stepsequences 401-$\alpha$ and 401-$\beta$ of method 400.

For some use-cases it can be sufficient to detect a change in the distribution rather than to encode the distribution. In other words, there can be focus to investigate the relations between distributions.

Method 401 is sub-method to method 400 and provides provisional intensity values Bn in vector {B}, cf. FIG. 5. To identify a distribution change over time, some constraints (such as filter and intensity variations) can be neglected. Simplified, a measurement device, even if not calibrated would nevertheless detect a change. Further, a device that is specialized to measure light spectra would not be sensitive to different light intensities. It would still be able to detect changes.

The assumptions apply to many situation for that encoding parameters 351, 352, 353 and 354 are defined, and for changes that go beyond the parameters the assumptions may not apply.

Therefore, the computer functions (cf. FIG. 3, 140/150/160/170) to compensate variations do not necessarily have to be applied. They can be used optionally.

Method 500 is a method to identify a change in the particular spectral distribution - from distribution 310-$\alpha$ to distribution 310-$\beta$ - of received light 210 from physical object 110 (cf. FIG. 1). As explained above, received light 210 has wavelength-specific intensity [A] within wavelength range 351 from minimum wavelength A_min to maximum wavelength A_max. The intensity [A] might change for some wavelength k.

First step sequence 401-$\alpha$ starts at a first point in time t$\alpha$. As already explained, the sequence starts with filtering 420-n received light 210 by filter set 120 with at least N = 3 filters 120-1, 120-n, 120-N, by each filter separately, and continues by measuring 430-n the intensity of filtered light 220 to obtain first vector {B}$\alpha$ with filter-specific intensity values Bn$\alpha$, for example, {B}$\alpha$ = {13, 23, 16}. (The values would not have to be called "provisional" values.)

Filter set 120 complies with uniqueness conditions that had been discussed above.

Second step sequence 401-$\beta$ starts at second point t$\beta$ that is later than the completion of first step sequence 401-$\alpha$ (here t$\alpha$_end). With filtering 420-n the received light 210 again by the same set of filters 120-1, 120-n, 120-N separately, and again measuring 430-n the intensity of the filtered light 220, the second sequence leads to second vector {B}$\beta$ with filter-specific intensity values Bn$\beta$, for example, {B}$\beta$ = {66, 32, 61}.

The waiting time between t$\alpha$_end and t$\beta$ depends on the use-case.

Method 500 continues by comparing first vector {B}$\alpha$ and second vector {B}$\beta$ according to pre-defined comparison rules, and by identifying a change in case that both vectors are distinguished from each other.

The skilled person knows how to compare vectors, and the above-mentioned Hamming and Euclidean distances are just examples for suitable tools. The rules should be use-case specific. Use-case specific tolerance rules can be applied optionally. For example, a shift from {13, 23, 16} to {14, 23, 15} goes across a non-zero distance but may not count as "change".

If changes in the light intensity are expected (between t$\alpha$ and t$\beta$), such changes may lead to incorrect identifications. As mentioned above, method 400 takes L_DATA into account, in steps that follow sequence 401.

It is therefor possible to apply computing functions, at least with the divider function (cf. FIG. 5, dividing 450/460). Applied to method 500 this means to separately divide the elements of the first vector {B}$\alpha$ by a first intensity reference value L_DATA_$\alpha$ and to divide the elements of the second vector {B}$\beta$ by second intensity reference value L_DATA_$\beta$, to obtain normalized first and second vectors. The comparison can then be performed with the normalized first and second vectors. Options to obtain L_DATA have been explained, for with FIG. 4, by calculating or by measuring (step 431).

## Discussion

Traditional approaches use sub-range specific filters. For example, digital cameras use filters in 3 sub-ranges (i.e., RGB-filters) and the corresponding spectral distribution could be described as a vector with 3 elements only. Such an approach is optimized to data consumers with color displays or color printers. The human viewer (who looks at the displayed or printed image) will be satisfied, and the spectral accuracy would be sufficient for that purpose.

However, variations in the spectral distribution convey information that could be of interest. Using filters that transmit light for complete range 351 appears advantageous because each of the filters transmit light over the whole range. A variation of the light - even a relatively small variation in a sub-range- would change the transmission (and hence the numerical values Bn at the output of the sensor.

The following example is helpful to explain this. System 100 may support a medical professional who examines a patient. There could be a requirement to differentiate certain regions of the body: some regions of the skin may be different than others, an internal organ may show slight different nuances in color. A camera with RGB only may not be able to provide LIGHT_DATA that would represent such nuances (in the spectral distribution). This is an example for an insufficiency in spectral resolution. The medical profession may not use a spectrometer or the like (that would be too large, or even dangerous to the patient). But an image capturing device that applies the alternative approach could be used.

Using the filters has the further advantage of not requiring a complete change in hardware. A camera with an RGB-filter would have more or less the same physical dimension as a camera with filter set 120, the additional components (such as computing functions 140/150/160/170, and the decoder) would not substantially increase the computation efforts (and would not add size to the system).

## Fabry-Perot (FB) filters

It is possible to construct filter arrays in that filters are implemented by Fabry-Perot filters. For example, hyperspectral cameras (traded as "xiSpec") are commercially available from XIMEA GmbH, 48155 Münster, Germany. In these cameras, hyper spectral filters are implemented as Fabry-Perot interference filters. The filters are added at wafer-level on top of pixel-structured sensors.

FP-filters have relatively high transmission (about 15 to 30 %) at relatively narrow bands, but they have relatively low transmission otherwise. Average transmission over min-max ranges seldom exceeds 50%.

In contrast, using filters as described above (i.e., filters 120-n in FIG. 2-3, filters in layer 825, FIG. 10 and others) can show a minimal transmission for any wavelength (in range 351) of 50% (cf. for example FIG. 14, for threshold 340). Having an average of 50% or having higher transmissions (as introduced above) does not contradict the occasional requirement to have relatively low transmission at a few specific single wavelengths.

As the sensors integrate over range 351 (cf. FIG. 15 for details), more available light contributes to the provisional intensity values Bn. Consequently, the abovediscussed filter approach would introduce less noise and hence the accuracy of Bn would be less affected by noise.

Having relatively more light available (in comparison to FP-filters) lets the sensor collect light more efficiently. This may be advantageous, because for example, the above-mentioned measurement time interval could be shorted (i.e., the time to perform the measuring steps). For applications in that light has to be encoded for consecutive images (i.e., in frames), that could lead to higher frame rates.

## Generic computer

FIG. 23 illustrates an example of a generic computer device which may be used with the techniques described here. FIG. 23 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device may 900 correspond to the computers that have been illustrated by other figures. Computing device 950 is also intended to represent various forms of mobile devices, such as personal digital assistants, cellular telephones, smart phones, driving assistance systems or board computers of vehicles and other similar computing devices. For example, computing device 950 may be used as a frontend by a user to interact with the computing device 900. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, causes the computer to perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952 that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the claims.

**Clause(s)**

Other aspects may be further described by way of the following clauses:

(1) A method to encode the particular spectral distribution of light into a spectral distribution identifier is disclosed. The light has a wavelength-specific intensity in the particular spectral distribution within a wavelength range, from a minimum wavelength to a maximum wavelength with a wavelength resolution. The method step receiving the light is followed by filtering the received light. The light is filtered by a filter set of at least $N = 3$ filters and with each filter of the filter set separately. The filter set complies with the following conditions: (a) each filter in the filter set has a filter-specific transmission function that describes a wavelength-specific transmission of the filter. (b) In a combined transmission function for the filter set, the concatenation of the transmissions - being the transmission vector - is unique for any wavelength and is unique for each spectral distribution of light in the wavelength range. (c) Each filter in the filter set is a single-state filter. The method continues, for each filter separately, by measuring the intensity of the filtered light over the wavelength range to obtain provisional intensity values. These values are the elements of a provisional intensity vector. The method is computer-implemented at least in some steps: By computing functions, the computer provides a spectral distribution identifier that encodes the particular spectral distribution of the received light. The computing functions use an intensity reference value to accommodate light variations and use pre-determined calibration data to accommodate filter variations.

(2) Optionally, providing the spectral distribution identifier is performed by computing functions that are implemented either according to a first alternative or to a second alternative. In the first alternative, a first computing function, in accordance with pre-determined calibration data, maps the provisional intensity values to calibrated intensity values being the elements of a calibrated intensity vector. A second computing function separately divides the calibrated intensity values of the calibrated intensity vector by the intensity reference value, to calculate normalized calibrated intensity values being the elements of a normalized calibrated intensity vector. The spectral distribution identifier is therefore provided as the normalized calibrated intensity vector. In the second alternative, a third computing function separately divides the provisional intensity values by the intensity reference value, to calculate normalized intensity values being the elements of a normalized intensity vector. A fourth computing function, in accordance with the pre-determined calibration data, maps the normalized intensity values to calibrated normalized intensity values being the elements of a calibrated normalized intensity vector. The spectral distribution identifier is therefore provided as the calibrated normalized intensity vector.

(3) Optionally, filtering the received light is performed by a filter set in that the conditions have been checked for compliance by simulation, based on encoding parameters that define each spectral distribution.

(4) Optionally, filtering uses single-state filters for that the transmission function remains constant while the steps filtering and measuring are being performed.

(5) Optionally, in the first alternative of the step providing, the second computing function obtains the intensity reference value by processing the provisional intensity vector, or by processing the calibrated intensity vector.

(6) Optionally, in the first alternative, the second computing function obtains the intensity reference value by calculations, selected from the following: (i) calculating the intensity reference value as the sum of the provisional intensity values or as the sum of the calibrated intensity values, (ii) calculating the intensity reference value as the average of the provisional intensity values or as the average of the calibrated intensity values, and (iii) calculating the intensity reference value as the median of the provisional intensity values or as the median of the calibrated intensity values.

(7) Optionally, in the second alternative of the step providing, the third computing function obtains the intensity reference value by processing the provisional intensity vector.

(8) Optionally, the third computing function obtains the intensity reference value by calculations, selected from the following: (i) calculating the intensity reference value as the sum of the provisional intensity values, (ii) calculating the intensity reference value as the average of the provisional intensity values, and (iii) calculating the intensity reference value as the median of the provisional intensity values.

(9) Optionally, the intensity reference value is obtained by measuring the intensity of the received light, by a sensor. In a first approach, the received light goes to the sensor directly. In a second approach, the received light goes to the sensor indirectly via a neutral light conductor, wherein the sensor measures the intensity of the received light with correcting the loss introduced by the neutral light conductor.

(10) Optionally, the step measuring the intensity of the filtered light is performed for each filter sequentially in a multiplex sequence with a single sensor.

(11) Optionally, in the step filtering the received light, the separation in execution is provided by having the filters of the filter set arranged as a moving filter array so that for one execution of the filtering step, the received light goes to the single sensor through one filter only.

(12) Optionally, the multiplex sequence with the single sensor is enhanced with the single sensor also measuring the intensity of the received light. The moving filter array either comprises (if applied in the first approach) a gap for passing the received light to the single sensor directly, or comprises (if applied in the second approach) a neutral light conductor that passes the received light to the single sensor.

(13) Optionally, the moving filter array is implemented, selected from the following: (i) a filter wheel by that the filters are arranged along a circle, wherein the filter wheel rotates around the center of that circle; and (ii) a filter block by that the filters are arranged along a line, and wherein the filter block moves in linear direction.

(14) Optionally, wherein filtering the received light by the set of filters is performed by a plurality of filter and sensor combinations that are arranged in a plane that is located perpendicular to the direction of the received light. Measuring the intensity of the received light is thereby performed by directing a portion of the received light also to at least one further sensor directly, thereby bypassing the filters of the filter set.

(15) Optionally, in both alternatives, the intensity reference value is obtained by measuring the intensity of the received light, wherein filtering the received light by the set of filters and measuring the intensity of the filtered light is performed in an arrangement in that the filters of the filter set are combined with corresponding sensors. These filter-and-sensor combinations are arranged in a plane that is located perpendicular to the direction of the received light. Measuring the intensity of the received light to obtain the intensity reference value is performed by conductor-and-sensor combinations that are arranged in the same plane. The filter-and-sensor combinations and the conductor-and-sensor combinations form a mosaic pattern in the plane.

(16) Optionally, in both alternatives, the mapping steps are performed by using calibration data derived from filter-specific deviations that are measured prior to receiving light. The filter-specific deviations are measured by comparing properties of the filters in the filter set to properties of reference filters of a reference filter set.

(17) Optionally, the mapping steps are preceded by determining calibration data by any of the following: (i) measuring individual transmission functions of the filters at least partially, to determine a filter-specific deviation type relative to the reference filters, being amplitude deviation, repetition pattern deviation, or wavelength offset deviation, and deriving calibration data from deviation type-specific look-up tables; (ii) training a neural network with simulation data for pre-defined programmable spectral distributions and with simulated intensity vectors and simulated filtering by simulated reference filters as ground truth, with the weights in the network serving as calibration data for performing the mapping step in the first alternative forwarding the provisional intensity values to the neural network that outputs calibrated intensity values, or in the second alternative forwarding the normalized intensity values to the auxiliary neural network that outputs calibrated normalized intensity values; and (iii) training a neural network with data obtained by measurements.

(18) Optionally, the filtering step is performed with filters for that the wavelength-specific transmissions are above transmission thresholds of at least 50% for all wavelengths in the wavelength range.

(19) Optionally, the filtering step is performed with filters, for that the filter-specific combinations of wavelength-specific transmissions are all unique for each wavelength.

(20) Optionally, the measuring step is implemented by at least one light sensor element that converts a quantity of photons into a readable electrical signal. The light sensor element is selected from the group of: photo detector, photo diode, photo transistor, photomultiplier tube, photomultiplier camera, and photometer.

(21) Optionally, performing the filtering and measuring steps are implemented by providing the set of filters being attached to multiple light sensor elements in an array with a surface that is perpendicular to the received light.

(22) Method (400) to encode the particular spectral distribution (310) of light (210) into a spectral distribution identifier (250/270), wherein the light (210) has a wavelength-specific intensity (Ak, [A]) in the particular spectral distribution (310) within a wavelength range (351), from a minimum wavelength ($\lambda$_min) to a maximum wavelength ($\lambda$_max) with a wavelength resolution (352, $\Delta\lambda$), wherein the wavelength range (351), the wavelength resolution (352), an amplitude range (353), and an amplitude accuracy (354) are encoding parameters that define an overall set (315) of spectral distributions for that encoding is possible, the method (400) comprising: receiving (410) the light (210); filtering (420-n) the received light (210) by a filter set (120) of at least N = 3 filters (120-1, 120-n, 120-N) by each filter (120-1, 120-n, 120-N) of the filter set (120) separately, wherein the filter set (120) complies with the following conditions: (1) each filter (120-n) in the filter set (120) has a filter-specific transmission function (Tn) describing a wavelength-specific (k) transmission (Tnk) of the filter (120-n), (2) in a combined transmission function ({T}) for the filter set (120), the concatenation ({T}k) of the transmissions (TnK) - being the transmission vector ({T}k) - is unique for any wavelength (k) and is unique for each spectral distribution (315) of light (215) in the wavelength range (351), (3) each filter (120-n) in the filter set (120) is a single-state filter; for each filter (120-n) separately, measuring (430-n) the intensity of the filtered light (220) over the wavelength range (351) to obtain provisional intensity values (Bn) being the elements of a provisional intensity vector ({B}, 230-n); by computing functions (140, 150, 160, 170), providing (402) a spectral distribution identifier (250, 270) that encodes the particular spectral distribution (310) of the received light (210) by being a vector with N numerical values, wherein the computing functions use an intensity reference value (L_DATA) to accommodate light variations and use pre-determined calibration data ({CAL}) to accommodate filter variations; wherein providing (402) the spectral distribution identifier (250, 270) is performed by computing functions (440, 450, 460, 470) that are implemented either according to a first alternative or to a second alternative, wherein in the first alternative (440, 450), a first computing function (140), in accordance with the pre-determined calibration data ({CAL}), maps (440-n) the provisional intensity values (Bn) to calibrated intensity values (Cn) being the elements of a calibrated intensity vector ({C}), and a second computing function (150) separately divides (450-n) the calibrated intensity values (Cn) of the calibrated intensity vector ({C}) by the intensity reference value (L_DATA), to calculate normalized calibrated intensity values (Dn) being the elements of a normalized calibrated intensity vector ({D}) so that the spectral distribution identifier (250) is provided as the normalized calibrated intensity vector ({D}); wherein in the second alternative (460-n, 470-n), a third computing function (160) separately divides (460-n) the provisional intensity values (Bn) by the intensity reference value (L_DATA), to calculate normalized intensity values (Fn) being the elements of a normalized intensity vector ({F}), and a fourth computing function (170) in accordance with the pre-determined calibration data ({CAL}), maps (470-n) the normalized intensity values (Fn) to calibrated normalized intensity values (Dn) being the elements of a calibrated normalized intensity vector ({D}) so that the spectral distribution identifier (270) is provided as the calibrated normalized intensity vector ({D});

wherein in both alternatives, the intensity reference value (L_DATA) is obtained by measuring (431) the intensity of the received light, wherein filtering (420-n) the received light (210) by the set (120) of filters (120-1, 120-n, 120-N) and measuring (430-n) the intensity of the filtered light (210) is performed in an arrangement in that the filters (120-n) of the filter set (120) are combined with corresponding sensors, wherein these filter-and-sensor combinations (823-12/830-12, 823-14/830-14) are arranged in a plane that is located perpendicular to the direction of the received light (210), and wherein measuring (431) the intensity of the received light (210) to obtain the intensity reference value (L_DATA) is performed by conductor-and-sensor combinations that are arranged in the same plane and wherein the filter-and-sensor combinations and the conductor-and-sensor combinations form a mosaic pattern in the plane; wherein the mapping (440-n, 470-n) steps are preceded by determining (702) calibration data ({CAL}) by training a neural network (140/170-NETWORK) with simulation data for pre-defined programmable spectral distributions and with simulated intensity vectors ({B}~) and simulated filtering by simulated reference filters (125~) as ground truth, with the weights in the network serving as calibration data ({CAL}) for performing the mapping step (440-n, 470-n) in the first alternative forwarding the provisional intensity values (Bn) to the neural network (140-NETWORK) that outputs calibrated intensity values (Cn) or in the second alternative forwarding the normalized intensity values (Cn) to the auxiliary neural network (170-NETWORK) that outputs calibrated normalized intensity values (Dn).

**References**

| | |
|---|---|
| 100 | data processing system |
| 110 | physical object |
| 101 | data provider |
| 102 | data link |
| 103 | data consumer |
| 104 | light splitter |
| 105 | encoder function |
| 106 | decoder function |
| 120 | filter set |
| 120-n | particular filter |
| 121A, 121B | light conductor |
| 125 | reference filter set |
| 125-n | particular reference filter |
| 128, 129 | moving filter array (BLOCK, WHEEL) |
| 130 | sensor |
| 131A, 131B | sensor |
| 140/170 | mapper |
| 150/160 | divider |
| 210 | light |
| 220-n | filtered light |
| 230-n, Bn | provisional intensity values |
| 250/270 | spectral distribution identifier |
| 310 | particular spectral distribution (of the received light) |
| 315 | overall set of spectral distributions |
| 320 | distribution of filtered light |
| 321, 322 | lines |
| 340 | threshold |
| 351 | wavelength range |
| 352 | spectral resolution |
| 353 | amplitude range |
| 354 | amplitude accuracy |
| 390 | particular spectral distribution as re-established |
| 400 | method (encoding) |
| 401 | step sequence as applied in method 500 |
| 402 | providing the spectral distribution identifier |
| 410 | receiving light |
| 420-n | filtering the received light |
| 430-n | measuring the intensity of the filtered light |
| 431 | measuring intensity of unfiltered light. |

| 440-n/470-n | mapping |
|---|---|
| 450-n/470-n | dividing |
| 500 | method to identify a change in spectral distribution |
| 600 | method to decode |
| 610 | receiving identifier |
| 620 | mapping |
| 701 | activity sequence at design time |
| 702 | activity sequence at calibration time |
| 711 | receive use-case specification, with encoding parameters |
| 712 | provide filter set |
| 721 | select reference filter set |
| 722 | compare filters to reference filters |
| 731 | verify production |
| 732 | obtain calibration data |
| 800 | device |
| 820 | filter |
| 823 | filter location |
| 825 | filter layer |
| 835 | sensor layer |
| 830 | sensor |
| 850 | pixel locations |
| 840/870 | mapper |
| 850/860 | divider |
| 880 | area |
| 900, 9xx | generic computer, and components |
| [ ] | notation to illustrate vectors, usually with K elements |
| { } | notation to illustrate vectors (or matrixes), usually with N elements |
| / / | notation to illustrate pluralities of vectors |
| ~ ~ | notation to illustrate pluralities of vectors, if simulated |
| ~ | indicates data that has been simulated |
| A, Ak | light intensity arriving at a filter, specific to wavelength |
| n, N | filter index to identify an individual filter, number of filters |
| k, q | index to identify particular wavelengths |
| K | number of individual wavelengths |
| L_DATA | intensity reference value |
| P | cardinality of set for all distributions |
| S | cardinality of sub-set |
| Tnk | transmission |
| t | time point |
| {DEV} | filter-specific deviations |
| {CAL} | filter-specific calibration data |
| $\lambda$ | wavelength |
| $\Delta\lambda$ | spectral resolution |
| $\alpha, \beta$ | consecutive step sequences 401 and time points in method 500 |

**Claims**

1. Method (400) to encode the particular spectral distribution (310) of light (210) into a spectral distribution identifier (250/270), wherein the light (210) has a wavelength-specific intensity (Ak, [A]) in the particular spectral distribution (310) within a wavelength range (351), from a minimum wavelength ($\lambda$_min) to a maximum wavelength ($\lambda$_max) with a wavelength resolution (352, $\Delta\lambda$), the method (400) comprising:

   receiving (410) the light (210);
   filtering (420-n) the received light (210) by a filter set (120) of at least N = 3 filters (120-1, 120-n, 120-N) by each filter (120-1, 120-n, 120-N) of the filter set (120) separately, wherein the filter set (120) complies with the following conditions:

      (1) each filter (120-n) in the filter set (120) has a filter-specific transmission function (Tn) describing a wavelength-specific (k) transmission (Tnk) of the filter (120-n),

(2) in a combined transmission function ({T}) for the filter set (120), the concatenation ({T}k) of the transmissions (TnK) - being the transmission vector ({T}k) - is unique for any wavelength (k) and is unique for each spectral distribution (315) of light (215) in the wavelength range (351),

(3) each filter (120-n) in the filter set (120) is a single-state filter;

for each filter (120-n) separately, measuring (430-n) the intensity of the filtered light (220) over the wavelength range (351) to obtain provisional intensity values (Bn) being the elements of a provisional intensity vector ({B}, 230-n);

by computing functions (140, 150, 160, 170), providing (402) a spectral distribution identifier (250, 270) that encodes the particular spectral distribution (310) of the received light (210), wherein the computing functions use an intensity reference value (L_DATA) to accommodate light variations and use pre-determined calibration data ({CAL}) to accommodate filter variations;

wherein providing (402) the spectral distribution identifier (250, 270) is performed by computing functions (440, 450, 460, 470) that are implemented either according to a first alternative or to a second alternative,

wherein in the first alternative (440, 450), a first computing function (140), in accordance with the pre-determined calibration data ({CAL}), maps (440-n) the provisional intensity values (Bn) to calibrated intensity values (Cn) being the elements of a calibrated intensity vector ({C}), and a second computing function (150) separately divides (450-n) the calibrated intensity values (Cn) of the calibrated intensity vector ({C}) by the intensity reference value (L_DATA), to calculate normalized calibrated intensity values (Dn) being the elements of a normalized calibrated intensity vector ({D}) so that the spectral distribution identifier (250) is provided as the normalized calibrated intensity vector ({D});

wherein in the second alternative (460-n, 470-n), a third computing function (160) separately divides (460-n) the provisional intensity values (Bn) by the intensity reference value (L_DATA), to calculate normalized intensity values (Fn) being the elements of a normalized intensity vector ({F}), and a fourth computing function (170) in accordance with the pre-determined calibration data ({CAL}), maps (470-n) the normalized intensity values (Fn) to calibrated normalized intensity values (Dn) being the elements of a calibrated normalized intensity vector ({D}) so that the spectral distribution identifier (270) is provided as the calibrated normalized intensity vector ({D});

wherein the mapping step (440-n, 470-n) is preceded by determining (702) calibration data ({CAL}) by training a neural network (140/170-NETWORK) with simulation data for pre-defined programmable spectral distributions and with simulated intensity vectors ({B}~) and simulated filtering by simulated reference filters (125~) as ground truth, with the weights in the network serving as calibration data ({CAL}) for performing the mapping step (440-n, 470-n) in the first alternative forwarding the provisional intensity values (Bn) to the neural network (140-NETWORK) that outputs calibrated intensity values (Cn) or in the second alternative forwarding the normalized intensity values (Cn) to the neural network (170-NETWORK) that outputs calibrated normalized intensity values (Dn).

2. Method (400) according to claim 1, wherein in both alternatives, the intensity reference value (L_DATA) is obtained by measuring (431) the intensity of the received light,

wherein filtering (420-n) the received light (210) by the set (120) of filters (120-1, 120-n, 120-N) and measuring (430-n) the intensity of the filtered light (210) is performed in an arrangement in that the filters (120-n) of the filter set (120) are combined with corresponding sensors, wherein these filter-and-sensor combinations (823-12/830-12, 823-14/830-14) are arranged in a plane that is located perpendicular to the direction of the received light (210), and

wherein measuring (431) the intensity of the received light (210) to obtain the intensity reference value (L_DATA) is performed by conductor-and-sensor combinations that are arranged in the same plane and wherein the filter-and-sensor combinations and the conductor-and-sensor combinations form a mosaic pattern in the plane.

3. Method (400) according to any of claims 1 and 2, wherein filtering (420-n) the received light (210) is performed by the filter set (120) in that the conditions have been checked for compliance by simulation, based on encoding parameters (351, 352, 353, 354) that define each spectral distribution (315).

4. Method (400) according to any of claims 1 to 3, being performed with single-state filters for that the transmission function remains constant while the step filtering (420-n) and measuring (430-n) are being performed.

5. Method (400) according to any of claims 1 to 4, wherein in the first alternative (440-n, 450-n) of the step providing (402), the second computing function (150) obtains the intensity reference value (L_DATA) by processing the provisional intensity vector ({B}), or by processing the calibrated intensity vector ({C}).

6. Method (400) according to any of claims 1 to 5, wherein in the first alternative (450-n), the second computing function (150) obtains the intensity reference value (L_DATA) by calculations, selected from the following:

calculating the intensity reference value (L_DATA) as the sum ($\Sigma$) of the provisional intensity values (Bn) or as the sum ($\Sigma$) of the calibrated intensity values (Cn),
calculating the intensity reference value (L_DATA) as the average ($\Sigma/N$) of the provisional intensity values (Bn) or as the average ($\Sigma/N$) of the calibrated intensity values (Cn), and
calculating the intensity reference value (L_DATA) as the median of the provisional intensity values (Bn) or as the median of the calibrated intensity values (Cn).

7. Method (400) according to any of claims 1 to 4, wherein in the second alternative (460-n) of the step providing (402), the third computing function (160) obtains the intensity reference value (L_DATA) by processing the provisional intensity vector ({B}).

8. Method (400) according to claim 7, wherein the third computing function (160) obtains the intensity reference value (L_DATA) by calculations, selected from the following:

calculating the intensity reference value (L_DATA) as the sum ($\Sigma$) of the provisional intensity values (Bn), calculating the intensity reference value (L_DATA) as the average ($\Sigma/N$) of the provisional intensity values (Bn), and
calculating the intensity reference value (L_DATA) as the median of the provisional intensity values (Bn).

9. Method (400) according to any of claims 1 to 8, wherein the intensity reference value (L_DATA) is obtained by measuring (431) the intensity of the received light (210), by a sensor (131A/131B),
wherein in a first approach, the received light (210) goes to the sensor (131A) directly; wherein in a second approach, the received light (210) goes to the sensor (131B) indirectly via a neutral light conductor (121B), wherein the sensor (131B) measures (431) the intensity of the received light (210) with correcting the loss introduced by the neutral light conductor (121B).

10. Method (400) according to any of claims 1 to 9, wherein the step measuring (430-n) the intensity of the filtered light (220) is performed for each filter (120-n) sequentially in a multiplex sequence with a single sensor (130).

11. Method (400) according to claim 10, wherein in the step filtering (420-n) the received light (210), the separation in execution is provided by having the filters (120-n) of the filter set (120) arranged as a moving filter array (128-BLOCK, 128-WHEEL) so that for one execution of the filtering step (430-n), the received light (210) goes to the single sensor (130) through one filter (120-n) only.

12. Method (400) according to claim 11, wherein the multiplex sequence with the single sensor (130) is enhanced with the single sensor (130/131A/131B) also measuring (431) the intensity of the received light (210) and wherein the moving filter array (129-BLOCK, 129-WHEEL) either comprises a gap (121A) for passing the received light to the single sensor (130) directly, or comprises a neutral light conductor (121B) that passes the received light (210) to the single sensor (130).

13. Method (400) according to any of claims 11 or 12, wherein the moving filter array is implemented, selected from the following:

a filter wheel (128-WHEEL, 129-WHEEL) by that the filters (120-n, 121A, 121B) are arranged along a circle, wherein the filter wheel (128-WHEEL, 129-WHEEL) rotates around the center of that circle; and
a filter block (128-BLOCK, 129-BLOCK) by that the filters (120-n, 121A, 121B) are arranged along a line, and wherein the filter block moves in linear direction.

14. Method (400) according to claims 1 to 9, wherein filtering (420-n) the received light (210) by the set (120) of filters (120-1, 120-n, 120-N) is performed by a plurality (880) of filter and sensor combinations (823-12/830-12, 823-14/830-14) that are arranged in a plane (X, Y) that is located perpendicular to the direction (Z) of the received light (210).

**15.** Computer-implemented method (600) to decode the spectral distribution identifier (250, 270) that is obtained by performing a method according to any of claims 1 to 14, the method (600) comprising the following steps:

receiving (610) the spectral distribution identifier (250/270, {D}), and
mapping (620) the spectral distribution identifier (250/270, {D}) to a particular spectral distribution [E]),
wherein mapping (620) is performed by any of the following:

accessing a library that represents pre-defined relations between particular spectral distribution identifiers (250/270, /{D}/) and particular spectral distributions (/[E]/);
simulating the encoding of a plurality of known input distributions (310, ~[A]~) to a corresponding plurality of spectral distribution identifiers (250/270, ~{D}~) and identifying the particular spectral distribution ([E]) as the particular simulated input distribution ([A]~) for that the corresponding simulated distribution identifier ({D}~) fits to the received spectral distribution identifier ({D}); and
processing the received spectral distribution identifier ({D}) by a pre-trained neural network (106-NETWORK) that classifies the received spectral distribution identifier ({D}) to a be one of a pre-defined distribution ([E]).

[A] = [ A1, A2, ... Ak, ... AK) ]

FIG. 1

```
┌──────────────────────────────────┐
│              101                 │
│          data provider           │
│                                  │
│   210         220-N              │
│   ────────────┼────────►         │
│                                  │
│               220-n              │                  ┌──────────┐      ┌──────────┐
│   ───────────┼────────►          │                  │   102    │      │   103    │
│                     {B} ---> {D} │─────────────────►│   data   │────► │   data   │
│               220-1              │                  │ channel  │      │ consumer │
│   ───────────┼────────►          │   LIGHT_DATA     └──────────┘      └──────────┘
│                                  │
│   120                            │
│   120-1,120-n,120-N              │       SPECTRAL_DATA {D} 250/270
│                                  │       L_DATA
│   125                            │       LOCATION_DATA
│   125-1,125-n,125-N reference    │       TIME_POINT_DATA
└──────────────────────────────────┘
```

100

# FIG. 2

FIG. 3

FIG. 4

```
          ┌──────────────────────────┐
          │   410 receiving light     │
          └──────────────────────────┘
                      │
                      ▼
          ┌──────────────────────────┐
          │   420-n filtering the     │
401       │      received light       │
          └──────────────────────────┘
                      │
                      ▼
          ┌──────────────────────────┐
          │   430-n measuring the     │
          │ intensity of the filtered │
          │          light            │
          └──────────────────────────┘
                      │   {B} = {B1, Bn, BN}
                      │
      ┌──────────────┐ ┌──────────────┐
      │   440-n      │ │   460-n       │
402   │   mapping    │ │   dividing    │
      └──────────────┘ └──────────────┘
    {C}={C1,Cn,CN}  {F}={F1,Fn,FN}
      ┌──────────────┐ ┌──────────────┐
      │   450-n      │ │   470-n       │
      │   dividing   │ │   mapping     │
      └──────────────┘ └──────────────┘
  {D}= D1,Dn,DN  {D}= D1,Dn,DN
      400
```

N filters, N sensors

```
┌────────┬────────┬────────┐
│ 420-1  │ 420-n  │ 420-N  │
└────────┴────────┴────────┘
     │        │        │
     ▼        ▼        ▼
┌────────┬────────┬────────┐
│ 430-1  │ 430-n  │ 430-N  │
│  B1    │  Bn    │  BN    │
└────────┴────────┴────────┘
```

N filters, 1 sensor
multiplex

```
┌────────┐
│ 420-1  │
├────────┤
│ 430-1  │ B1
└────────┘
    │
    ▼
┌────────┐
│ 420-n  │
├────────┤
│ 430-n  │ Bn
└────────┘
    │
    ▼
┌────────┐
│ 420-N  │
├────────┤
│ 430-N  │ BN
└────────┘
```

**FIG. 5**

**design time**

711
receive use-case
specification,
encoding parameters

721
select reference
filters 125-n in
reference filter set
125

731
production
verification

701

**calibration time**

712
provide filter set

722
compare filters 120-n
to reference 125-n
deviations {DEV}

STOP

{DEV}

732
obtain{CAL}

STOP

{CAL}

702

**run-time**

410

420-n

430-n

{B}

431
measuring
intensity

402

L_DATA
Σ, Σ/N ...

L_DATA
LUMINANCE

{D}

400

**FIG. 6**

FIG. 7

Z

210

104

| 120-1 | 120-n | 120-N |
| 130-1 | 130-n | 120-N |

B1          Bn          BN

{B} = {B1, Bn,  BN}

L_DATA = function {B}

X

210

104

| 120-1 | 120-n | 120-N | **121B** |
| 130-1 | 130-n | 130-N | **131B** |

B1          Bn          BN          **LUMINANCE**

{B} = {B1, Bn,  BN}

L_DATA = LUMINANCE

} side-view

| 120-1 130-1 | 120-n 130-n | 120-N 130-N |
| 120-1' 130-1' | 120-n' 130-n' | 120-N' 130-N' |

Y

X

| 120-1 130-1 | **121B** **131B** | 120-N 130-N |
| **121B'** **131B'** | 120-n 130-n | **121B''** **131B''** |

} above-view

**FIG. 8**

FIG. 9

Z
210                                    filters 820-xy

220   823-11  823-12  823-13  823-14   filter layer 825, filter locations 823-xy
      830-11  830-12  830-13  830-14   sensor layer 835, sensors 830-xy

                                       M+N    {B}
                            Y = 1...4          {LUMINANCE}

| W | 1 | W | 4 |
| 11 | 21 | 31 | 41 |
| 2 | W | 3 | W |
| 12 | 22 | 32 | 42 |
| W | 4 | W | 1 |
| 13 | 23 | 33 | 43 |
| 3 | W | 2 | W |
| 14 | 24 | 34 | 44 |

{CAL} → 840 mapper {B} to {C}

860 divider {B} to {F}

850 divider {C} to {D}

880 area with M locations

870 mapper {F} to {D}

850-31 pixel location 850-xy

{D}

FIG. 10              X = 1 ...4        800

first filter

second filter

third filter

T1

T2

T3

340

$\{[T]\}$

k          q

$\begin{vmatrix} T1 \\ T2 \\ T3 \end{vmatrix}k$          $\neq$          $\begin{vmatrix} T1 \\ T2 \\ T3 \end{vmatrix}q$

$\{T\}k$     concatenated transmission vectors          $\{T\}q$

**FIG. 11**

T1

T2

T3

k→ ←q

blocking range
with T2 = 0

T1 > 0, T1≠ T3 still unique
T2 = 0
T3 > 0

**FIG. 12**

FIG. 13

FIG. 14

FIG. 15

FIG. 16

140/170-NETWORK

{CAL}

140
mapper

{B}          {C}

170
mapper

{F}          {D}

140/170-LOOKUP

{CAL}

Type(1)

Type(2)

Type(3)

140/170-
ARITHMETIC

{CAL}

FIG. 17

315

s=1

S

400 500 600 700 800

120-4~
120-3~
120-2~
120-1~
simul.
filter

N=4

130~
simul.
sensor

B1
B2
B3
B4

{B}~1
{B}~2
{B}~3

distances

S
simulations

{B}~S

Hamming

0.5   0.75   1.0

Euclidean

FIG. 18

{D}1 = {12, 23, 16}

106 decoder function

610
receiving

<u>600</u>

620
mapping

/{D}/ --> /[E]/          LOOKUP

**{D}1 --> [E]1**
{D}2 --> [E]9
 ...
{D}P --> [E]...

~{D}~ --> ~[E]~          RECURSIVE FIT

**{D}1~ --> ~[E]1, {D}1 --> [E]1**

NEURAL NETWORK

390-1

**[E]1**

390-p

[E]p

.
.
.

[E]P

390-P

**FIG. 19**

FIG. 20

(random) spectra [A]~

(random)
spectrum
generator

filter 120-n~
sensor 130~
simulator

{B}~, {D}~

network under
training
106-NETWORK

[A]~ for each spectrum = ground truth

**FIG. 21**

$$\{B\}\alpha = \begin{vmatrix} 13 \\ 23 \\ 16 \end{vmatrix}$$

$$\{B\}\beta = \begin{vmatrix} 66 \\ 32 \\ 61 \end{vmatrix}$$

time

tα    tα_end

method 401-α

tβ   tβ_end

method 401-β

500

# FIG. 22

FIG. 23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018056976 A1

### Non-patent literature cited in the description

- **CHANG** ; **CHEIN-I**. Hyperspectral Imaging: Techniques for Spectral Detection and Classification. Springer Science+Business Media New York, 2003

- **KNITTL, Z**. Optics of thin films. John Wiley, 1981